# EUROPEAN PATENT APPLICATION

(11) **EP 4 152 875 A1**
(43) Date of publication of application: **22.03.2023**
(21) Application number: 21822280.0
(22) Date of filing: 18.05.2021
(51) Int. Cl.: H04W 74/00

(54) **ACCESS METHOD AND APPARATUS, ELECTRONIC DEVICE, AND READABLE STORAGE MEDIUM**

(30) Priority: 13.06.2020 CN 202010538547; 06.08.2020 CN 202010784789
(71) Applicant: Huawei Technologies Co., Ltd., Shenzhen, Guangdong 518129 (CN)
(72) Inventor: LIU, Yun, Shenzhen, Guangdong 518129 (CN); XUE, Lixia, Shenzhen, Guangdong 518129 (CN)
(74) Representative: Maiwald GmbH
(86) International application number: PCT/CN2021/094260
(87) International publication number: WO 2021/249133

(57) **Abstract**

Embodiments of this application provide an access method, an apparatus, an electronic device, and a readable storage medium. The method includes: A network device sends first configuration information on a first downlink carrier, where the first configuration information indicates a first uplink resource; the network device receives a first signal or first information from the terminal device on the first uplink resource; and when determining, based on the first signal or the first information, that the terminal device accesses the network device on the first downlink carrier, the network device sends a downlink signal on the first downlink carrier. During random access by the terminal device, the network device may configure, for the terminal device, the first uplink resource on which a downlink carrier used to access the network device can be fed back. Therefore, the terminal device can feed back, on the first uplink resource, the downlink carrier used to access the network device. In this way, the network device can distinguish which downlink carrier is used by the terminal device to access the network device, and send the downlink signal on the downlink carrier. As a result, the terminal device can receive the downlink signal.

## Description

This application claims priority to Chinese Patent Application No. 202010538547.2, filed with the China National Intellectual Property Administration on June 13, 2020 and entitled "AUXILIARY INFORMATION PROVIDING METHOD AND UE"; and Chinese Patent Application No. 202010784789.X, filed with the China National Intellectual Property Administration on August 6, 2020 and entitled "ACCESS METHOD, APPARATUS, ELECTRONIC DEVICE, AND READABLE STORAGE MEDIUM", which are incorporated herein by reference in their entireties.

### TECHNICAL FIELD

Embodiments of this application relate to communication technologies, and in particular, to an access method, an apparatus, an electronic device, and a readable storage medium.

### BACKGROUND

In a new radio access (new radio access, NR access) network or the 5th generation (the 5th generation, 5G) mobile communication network, a concept of supplementary uplink (supplementary uplink, SUL) is proposed to improve uplink signal coverage of a cell, especially uplink signal coverage of a high-frequency cell.

Currently, for a time division duplexing (time division duplexing, TDD) system, one carrier is configured for one terminal device, and the terminal device performs uplink and downlink communication on the carrier based on time division. The NR network or the 5G network can configure another uplink carrier for the terminal device, and the uplink carrier is an SUL. When the terminal device is at an edge of a cell, the terminal device may perform uplink communication through the SUL. In this way, uplink coverage of the UE is improved. However, the carrier to which the SUL belongs is also configured as a carrier on which another terminal device performs uplink and downlink communication. The carrier is used for uplink communication of the carrier and implementation of the SUL. This results in heavy use of uplink resources of the carrier.

To reduce uplink resource occupation on the carrier to which the SUL belongs, a resource used for uplink communication of the carrier and a resource occupied by the SUL may be configured as one resource. In other words, a same uplink resource on the carrier can be used for uplink communication of the carrier and implementation of the SUL. However, in this scenario, a network device cannot determine that data on the uplink resource comes from which terminal device.

### SUMMARY

Embodiments of this application provide an access method, an apparatus, an electronic device, and a readable storage medium, so that a network device can distinguish which downlink carrier is used by a terminal device to access the network device.

According to a first aspect, an embodiment of this application provides an access method. The method is applied to a network device or a chip in a network device. The method is described below by using an example in which the method is applied to a network device. In this method, the network device sends first configuration information on a first downlink carrier, where the first configuration information indicates a first uplink resource; the network device receives a first signal or first information from a terminal device on the first uplink resource; the network device determines, based on the first signal or the first information, whether the terminal device accesses the network device on the first downlink carrier; and the network sends a downlink signal on the first downlink carrier when the terminal device accesses the network device on the first downlink carrier. The first uplink resource is on a second uplink carrier, the second uplink carrier is a supplementary uplink SUL, and frequency bands of the second uplink carrier and a first uplink carrier that corresponds to the first downlink carrier are different.

It should be understood that in the foregoing technical solutions, during random access by the terminal device, the network device may configure, for the terminal device, the first uplink resource on which the downlink carrier used to access the network device can be fed back. Therefore, the terminal device can feed back, on the first uplink resource, the downlink carrier used to access the network device. In this way, the network device can distinguish which downlink carrier is used by the terminal device to access the network device, and the network device may send the downlink signal on the downlink carrier. As a result, the terminal device can receive the downlink signal.

In the foregoing method, the network device may independently send the first configuration information on the first downlink carrier. However, to reduce signaling interaction between the terminal device and the network device during random access, the network device may use a current random access message to carry the first configuration information. The access method in this application is described in the following three possible implementations. It should be understood that the network device may send fourth configuration information on a second downlink carrier, where the fourth configuration information indicates a fourth uplink resource on the second uplink carrier, and the fourth uplink resource is used to carry a preamble sequence. In this embodiment of this application, to save uplink resources on the second uplink carrier, the network device may configure a same time-domain frequency-domain code-domain resource for the SUL and an NUL that is on the second uplink carrier. In other words, the fourth uplink resource and the uplink resource that is configured by the network device for the SUL and that carries a preamble sequence may occupy a same time-domain frequency-domain code-domain resource on the second uplink carrier.

In a first possible implementation, in a 4-step RACH scenario, the network device may send a system broadcast message on the first downlink carrier. The system broadcast message may include first configuration information and second configuration information. The first configuration information indicates the first uplink resource on which the terminal device can feedback a downlink carrier used for access. The second configuration information indicates the second uplink resource on the second uplink carrier, and the second uplink resource is used to carry a preamble sequence. The second uplink resource and the fourth uplink resource occupy a same time-domain frequency-domain code-domain resource on the second uplink carrier. In other words, in the existing 4-step RACH technical solution, the network device configures, for the terminal device, the second uplink resource carrying the preamble sequence and the first uplink resource on which the downlink carrier used for access can be fed back. In this way, the terminal device may send the first signal or the first information on the first uplink resource, and send the preamble sequence on the second uplink resource, so that the network device obtains the downlink carrier used by the terminal device to access the network device. It should be understood that the first configuration information and the second configuration information may be included in a whole piece of configuration information. For example, in this embodiment of this application, a SIB in the system broadcast message may carry the configuration information.

In this implementation, the first uplink resource may be a PRACH resource or a PUSCH resource on the second uplink carrier. Because information carried on the PRACH resource is limited, when the first uplink resource is a PRACH resource, the terminal device may send the first signal on the first uplink resource, where the first signal may be a sequence. It should be understood that there is a correspondence between the preamble sequence and the sequence, and the correspondence may be carried in the system broadcast message. One preamble sequence carried on the second uplink resource corresponds to one sequence carried on the first uplink resource, or a plurality of preamble sequences carried on the second uplink resource correspond to one sequence carried on the first uplink resource. Because the PUSCH resource can carry more information compared with the PRACH resource, the terminal device may send the first information on the first uplink resource when the first uplink resource is the PUSCH resource.

When the network device receives the preamble sequence, the network device may detect, on the first uplink resource corresponding to the second uplink resource, whether there is the first signal from the terminal device. If detecting that the first uplink resource carries the first signal, the network device may determine that the terminal device accesses the network device on the first downlink carrier.

In a second possible implementation, in the 4-step RACH scenario, the network device may use Msg2 to carry the first configuration information, where Msg2 is sent to the terminal device. In this implementation, the network device sends the second configuration information on the first downlink carrier, to configure the second uplink resource carrying the preamble sequence. The terminal device may send Msg1 to the network device on the second uplink resource, where Msg1 carries the preamble sequence. In this embodiment of this application, the second uplink resource and the fourth uplink resource occupy a same time-domain frequency-domain code-domain resource on the second uplink carrier. Therefore, after receiving the preamble sequence on the second uplink resource, the network device cannot determine whether the downlink carrier used by the terminal device to access the network device is the first downlink carrier or the second downlink carrier. In this embodiment of this application, the network device may send Msg2 on both the first downlink carrier and the second downlink carrier, to ensure that the terminal device can receive an uplink resource that is configured by the network device for the terminal device and that carries message 3 Msg3, so as to ensure that the terminal device successfully accesses the network device.

In this implementation, Msg2 may carry the first configuration information. The first configuration information may be an uplink resource that carries service data of the terminal device. For example, if the service data is Msg3, the uplink resource may be a PUSCH resource on the second uplink carrier. Because a PUSCH resource can carry more information compared with a PRACH resource, the terminal device may send the first information on the first uplink resource. The first information indicates that the terminal device accesses the network device on the first downlink carrier. Alternatively, in this embodiment of this application, in addition to resources carrying the preamble sequence and the service data, the network device may further configure, for the terminal device, an uplink resource for carrying the first signal or the first information. The uplink resource may be different from the resources for carrying the preamble sequence and the service data.

When receiving Msg3 on the first uplink resource, the network device may detect whether a corresponding bit on the first uplink resource carries the first information. If it is detected that the corresponding bit on the first uplink resource carries the first information, it can be determined that the terminal device accesses the network device on the first downlink carrier.

In a third possible implementation, in a 2-step RACH scenario, the network device may send a system broadcast message on the first downlink carrier. The system broadcast message may include first configuration information and third configuration information. The first configuration information and the third configuration information may be configured in a whole piece of configuration information. In other words, the system broadcast message includes configuration information, and the configuration information includes the first configuration information and the third configuration information. A SIB of the system broadcast message may carry the configuration information. Different from the foregoing first manner, for 2-step RACH, the terminal device may use a message (MsgA) to carry the preamble sequence and the service data. Therefore, the configuration information in the system broadcast message in this embodiment of this application needs to be used to configure, for the terminal device, an uplink resource for carrying the service data and an uplink resource for carrying the preamble sequence. Correspondingly, the third configuration information in this embodiment of this application indicates the third uplink resource on the second uplink carrier, where the third uplink resource is used to carry the preamble sequence.

The first uplink resource in this embodiment of this application is the uplink resource is used to carry the service data of the terminal device, and the first uplink resource is also used to carry the first information. In this embodiment of this application, the terminal device may send the service data on a PUSCH resource, and may further use the PUSCH resource to carry the first information. Optionally, in this embodiment of this application, the network device may allocate, on the PUSCH resource, a bit for carrying the first information. There is a correspondence between the preamble sequence carried in the third configuration information and the PUSCH resource indicated by the first configuration information, and the system broadcast message may carry the correspondence.

It should be understood that after receiving the preamble sequence on the third uplink resource, the network device may detect whether there is the first information on the PUSCH resource corresponding to the preamble sequence. If the PUSCH resource carries the first information, it can be determined that the terminal device accesses the network device on the first downlink carrier, that is, it can be determined that the terminal device accesses the network device through the SUL.

In the process in which the terminal device accesses the network device described in the foregoing three manners, a message sent by the network device to the terminal device may carry the first configuration information. An embodiment of this application further provides another access method. The network device may preconfigure a code domain resource set of the preamble sequence used when the terminal device accesses the network device on the first downlink carrier. When the preamble sequence is carried in the code domain resource set, the network device may determine that the terminal device accesses the network device on the first downlink carrier. In this embodiment of this application, the fourth uplink resource and the resource that is configured by the network device for the SUL and that carries the preamble sequence occupy different time-domain frequency-domain resources on the second uplink carrier, so that the network device can determine, based on a time domain, a frequency domain, and a code domain of the resource carrying the preamble sequence, whether the terminal device accesses the network device through the SUL. In this embodiment of this application, to reduce uplink resource occupation on the second uplink carrier, the fourth uplink resource and the resource that is configured by the network device for the SUL and that carries the preamble sequence may occupy a same time-domain frequency-domain resource on the second uplink carrier. In this way, the network device may determine, based on a code domain resource carrying the preamble sequence, whether the terminal device accesses the network device through the SUL. The following describes the access method in two possible implementations.

In a first possible implementation, in a 4-step RACH scenario, the network device sends the system broadcast message on the first downlink carrier, where the system broadcast message includes first configuration information, and the first configuration information specifically indicates a code domain resource set of the first uplink resource. The preamble sequence in the code domain resource set indicates that the terminal device accesses the network device on the first downlink carrier. The terminal device may determine, based on the downlink carrier used to access the network device, to send Msg1 in a corresponding code domain resource set, in other words, to send the preamble sequence in a corresponding code domain resource set. It should be understood that, in this embodiment of this application, the first uplink resource is the PRACH resource carrying the preamble sequence, and the preamble sequence may be the first signal.

In this implementation, the network device can determine, based on the preamble sequence, whether the terminal device accesses the network device on the first downlink carrier. In this embodiment of this application, the network device may determine, based on a code domain resource set including the code domain resource carrying the preamble sequence, whether the terminal device accesses the network device on the first downlink carrier. The preamble sequence in the code domain resource set indicates that the terminal device accesses the network device on the first downlink carrier.

In a second possible implementation, in a 2-step RACH scenario, the network device sends the system broadcast message on the first downlink carrier, where the system broadcast message includes first configuration information and third configuration information, and the first configuration information indicates a corresponding code domain resource set of the first uplink resource. Similar to the foregoing technical solution, the terminal device may determine, based on the downlink carrier used to access the network device, to send Msg1 in a corresponding code domain resource set, in other words, to send the preamble sequence in a corresponding code domain resource set. It should be understood that, in this embodiment of this application, the first uplink resource is the PRACH resource carrying the preamble sequence, and the preamble sequence may be the first signal. In this implementation, the network device can determine, based on the preamble sequence, whether the terminal device accesses the network device on the first downlink carrier. In this embodiment of this application, the network device may determine, based on a code domain resource set including the code domain resource carrying the preamble sequence, whether the terminal device accesses the network device on the first downlink carrier. The preamble sequence in the code domain resource set indicates that the terminal device accesses the network device on the first downlink carrier.

In a possible design, an uplink resource corresponding to an SUL in another frequency band is further configured on the second uplink carrier. For example, the network device may send fifth configuration information on a third downlink carrier. The fifth configuration information indicates a fifth uplink resource, where the fifth uplink resource is on the second uplink carrier, and the fifth uplink resource is used to carry the first signal or the first information. A frequency band of a third uplink carrier corresponding to the third downlink carrier is different from that of the first uplink carrier.

The first uplink resource may be different from the fifth uplink resource. The network device may determine, based on the uplink resource carrying the first signal or the first information, that the downlink carrier used for access to the network device by the terminal device that sends the first signal or the first information is the first downlink carrier or the third downlink carrier. To reduce uplink resource occupation on the second uplink carrier, the first uplink resource may be the same as the fifth uplink resource. In this case, the first signal or the first information may indicate a first downlink carrier or a third downlink carrier used to access the network device, so that the network device can determine whether a downlink carrier corresponding to a preamble sequence from a same uplink resource is the first downlink carrier or the third downlink carrier, and then the network device can communicate with the terminal device on the downlink carrier.

According to a second aspect, an embodiment of this application provides an access method. The method includes: A terminal device receives first configuration information on a first downlink carrier, where the first configuration information indicates a first uplink resource, the first uplink resource is on a second uplink carrier, the second uplink carrier is a supplementary uplink SUL, and frequency bands of the second uplink carrier and a first uplink carrier that corresponds to the first downlink carrier are different; and the terminal device sends a first signal or first information on the first uplink resource, where the first signal or the first information indicates that the terminal device accesses a network device on the first downlink carrier.

In the foregoing technical solution, during random access by the terminal device, the network device may configure, for the terminal device, the first uplink resource on which the downlink carrier used to access the network device can be fed back. Correspondingly, the terminal device can feed back, on the first uplink resource, the downlink carrier used to access the network device. In this way, the network device can send a downlink signal on the downlink carrier. As a result, the terminal device can receive the downlink signal.

In a possible implementation, the first signal is a sequence, the first uplink resource is used to carry the sequence, and the method further includes: receiving second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource; and the sending a first signal or first information on the first uplink resource includes: sending the preamble sequence on the second uplink resource, and sending the sequence corresponding to the preamble sequence on the first uplink resource.

In a possible implementation, the first uplink resource is an uplink resource carrying service data of the terminal device, the first uplink resource is used to carry the first information, and the method further includes: receiving third configuration information on the first downlink carrier, where the third configuration information indicates a third uplink resource on the second uplink carrier, the third uplink resource is used to carry a preamble sequence, and the first configuration information and the third configuration information are included in a whole piece of configuration information.

In a possible implementation, the first uplink resource is an uplink resource carrying the service data of the terminal device, and the first uplink resource is used to carry the first information, where the service data is message 3 Msg3.

In a possible implementation, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

According to a third aspect, an embodiment of this application provides an access apparatus. The access apparatus may be a network device, a chip in a network device, or a system on chip. The access apparatus includes a communication module and a processing module. The communication module is configured to send first configuration information on a first downlink carrier and receive a first signal or first information from a terminal device on a first uplink resource, where the first configuration information indicates the first uplink resource, the first uplink resource is on a second uplink carrier, the second uplink carrier is a supplementary uplink SUL, and frequency bands of the second uplink carrier and a first uplink carrier that corresponds to the first downlink carrier are different. The processing module is configured to determine, based on the first signal or the first information, whether the terminal device accesses the network device on the first downlink carrier. The communication module is further configured to send a downlink signal on the first downlink carrier when the terminal device accesses the network device on the first downlink carrier.

In a possible design, the first signal is a sequence, and the first uplink resource is used to carry the sequence. The communication module is configured to send second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource.

In a possible design, the first uplink resource is an uplink resource used to carry service data of the terminal device, the first uplink resource is used to carry the first information, and the first information indicates that the terminal device accesses the network device on the first downlink carrier.

The communication module is further configured to send third configuration information on the first downlink carrier, where the third configuration information indicates a third uplink resource on the second uplink carrier, the third uplink resource is used to carry a preamble sequence, and the first configuration information and the third configuration information are included in a whole piece of configuration information; or
the communication module is further configured to send the first configuration information on a second downlink carrier corresponding to the second uplink carrier, where the service data is message 3 Msg3.

In a possible design, the communication module is further configured to send fourth configuration information on a second downlink carrier corresponding to the second uplink carrier, where the fourth configuration information indicates a fourth uplink resource on the second uplink carrier, and the fourth uplink resource is used to carry a preamble sequence.

In a possible design, a second uplink resource and the fourth uplink resource occupy a same time-domain frequency-domain code-domain resource on the second uplink carrier; or a third uplink resource and the fourth uplink resource occupy a same time-domain frequency-domain code-domain resource on the second uplink carrier.

In a possible design, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

In a possible design, the first uplink resource and the fourth uplink resource occupy a same time-domain frequency-domain resource on the second uplink carrier.

In a possible design, the first uplink resource and the fourth uplink resource occupy different time-domain frequency-domain resources on the second uplink carrier.

In a possible design, the communication module is further configured to send fifth configuration information on a third downlink carrier, where the fifth configuration information indicates a fifth uplink resource, the fifth uplink resource is on the second uplink carrier, the fifth uplink resource is used to carry the first signal or the first information, a frequency band of the third downlink carrier is different from that of the first downlink carrier, and the first signal or the first information indicates that the terminal device accesses the network device on the first downlink carrier or the third downlink carrier.

According to a fourth aspect, an embodiment of this application provides an access apparatus. The access apparatus may be a terminal device, a chip in a terminal device, or a system on chip. The access apparatus includes a first communication module and a second communication module. The first communication module is configured to receive first configuration information on a first downlink carrier, where the first configuration information indicates a first uplink resource, the first uplink resource is on a second uplink carrier, the second uplink carrier is a supplementary uplink SUL, and frequency bands of the second uplink carrier and a first uplink carrier that corresponds to the first downlink carrier are different. The second communication module is configured to send a first signal or first information on the first uplink resource, where the first signal or the first information indicates that the terminal device accesses a network device on the first downlink carrier.

In a possible design, the first signal is a sequence, and the first uplink resource is used to carry the sequence.

The first communication module is further configured to receive second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource.

The second communication module is configured to send the preamble sequence on the second uplink resource, and send the sequence corresponding to the preamble sequence on the first uplink resource.

In a possible design, the first uplink resource is an uplink resource carrying service data of the terminal device, and the first uplink resource is used to carry the first information. The first communication module is further configured to receive third configuration information on the first downlink carrier, where the third configuration information indicates a third uplink resource on the second uplink carrier, the third uplink resource is used to carry the preamble sequence, and the first configuration information and the third configuration information are included in a whole piece of configuration information.

In a possible design, the first uplink resource is an uplink resource carrying the service data of the terminal device, and the first uplink resource is used to carry the first information, where the service data is message 3 Msg3.

In a possible design, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

According to a fifth aspect, an embodiment of this application provides an electronic device, where the electronic device may be the network device in the first aspect or the terminal device in the second aspect. The electronic device includes a processor, a memory, and a transceiver. The transceiver is coupled to the processor. The processor controls receiving and sending of the transceiver.

The memory is configured to store computer-executable program code. The program code includes instructions. When the processor executes the instructions, the instructions enable the communication apparatus to perform the access method according to the first aspect or the second aspect.

According to a sixth aspect, a computer-readable storage medium is provided, where the computer-readable storage medium stores instructions. When the instructions are run on a computer, the computer is enabled to perform the method in either of the first aspect or the second aspect.

According to a seventh aspect, a computer program product including instructions is provided. When the computer program product runs on a computer, the computer is enabled to perform the method in either of the first aspect or the second aspect.

According to an eighth aspect, an embodiment of this application provides a chip, where the chip includes a processor. When the processor executes instructions, the processor is configured to perform the method in either of the first aspect or the second aspect. The instructions may be from a memory inside the chip, or may be from a memory outside the chip. Optionally, the chip further includes an input/output circuit.

According to a ninth aspect, an embodiment of this application provides a communication system, including a network device and a terminal device. The network device is configured to perform the access method in the first aspect. The terminal device is configured to perform the access method in the second aspect.

For technical effects brought by the second aspect to the ninth aspect, refer to the technical effects brought by the method in the first aspect. Details are not described herein again.

### BRIEF DESCRIPTION OF DRAWINGS

FIG. 1 is a schematic diagram of a system architecture that applies an access method according to an embodiment of this application;
FIG. 2 is a schematic diagram of a carrier allocation manner;
FIG. 3 is a schematic diagram of another carrier allocation manner;
FIG. 4 is a schematic flowchart of 4-step RACH;
FIG. 5 is a schematic flowchart of 2-step RACH;
FIG. 6 is a schematic flowchart of an embodiment of an access method according to an embodiment of this application;
FIG. 7 is a schematic flowchart of another embodiment of an access method according to an embodiment of this application;
FIG. 8 is a schematic diagram of resource allocation according to an embodiment of this application;
FIG. 9 is a schematic diagram of a correspondence between a preamble sequence and a sequence according to an embodiment of this application;
FIG. 10 is a schematic flowchart of still another embodiment of an access method according to an embodiment of this application;
FIG. 11 is a schematic flowchart of yet another embodiment of an access method according to an embodiment of this application;
FIG. 12 is a schematic flowchart of still yet another embodiment of an access method according to an embodiment of this application;
FIG. 13 is a schematic flowchart of a further embodiment of an access method according to an embodiment of this application;
FIG. 14 is a schematic diagram of a structure of an access apparatus according to an embodiment of this application;
FIG. 15 is a schematic diagram of a structure of another access apparatus according to an embodiment of this application; and
FIG. 16 is a schematic diagram of a structure of an electronic device according to an embodiment of this application.

### DESCRIPTION OF EMBODIMENTS

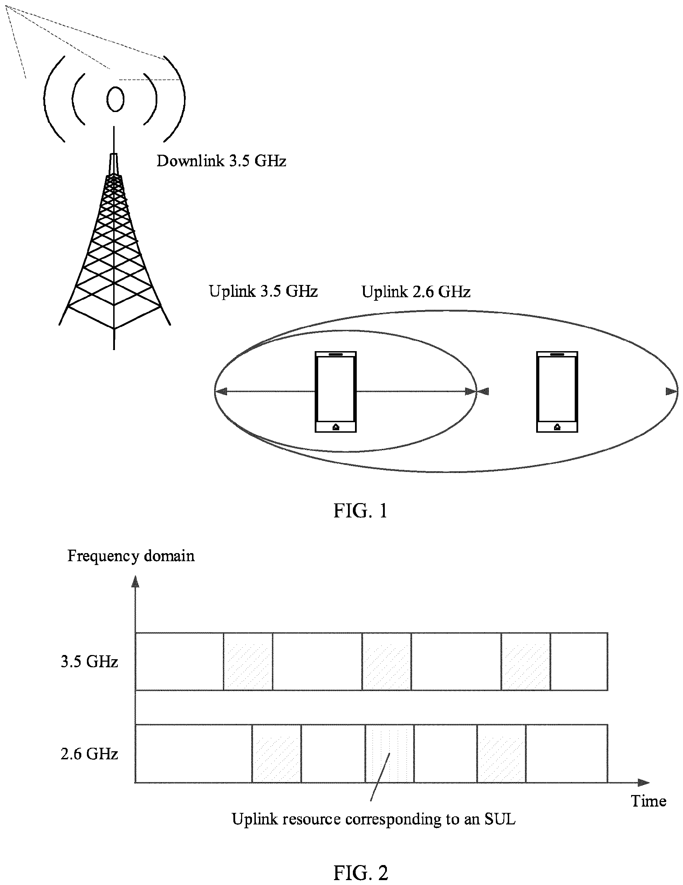

FIG. 1 is a schematic diagram of a system architecture that applies an access method according to an embodiment of this application. As shown in FIG. 1, the system architecture may include a network device and a terminal device. In FIG. 1, an example in which a system architecture includes one network device and one terminal device is used for description. The network device may be a device that communicates with a terminal device (or referred to as a communication terminal or a terminal). The network device may configure an uplink carrier and a downlink carrier for the terminal device. Frequency bands corresponding to the uplink carrier and the downlink carrier may be the same. For example, both the frequency bands may be 3.5 GHz. The network device may send a downlink signal to the terminal device on the downlink carrier, and the terminal device may send an uplink signal to the network device on an uplink carrier. In this way, communication between the network device and the terminal device can be implemented. Because a signal transmit power of the terminal device is low, but a path loss of signal transmission in a cell is large, especially in a high-frequency cell, the network device cannot receive an uplink signal of a terminal device in an edge area of the cell. However, because a signal transmit power of the network device is high, the terminal device in the edge area of the cell can receive a downlink signal from the network device. Therefore, a problem of asymmetric uplink and downlink coverage of the cell is caused.

To improve uplink signal coverage of a cell, supplementary uplink (supplementary uplink, SUL) is introduced. The terminal device in the edge area of the cell may send an uplink signal to the network device on an SUL, and the network device receives the uplink signal on the SUL. This can compensate for poor uplink coverage of the cell. For example, as shown in FIG. 1, frequency bands corresponding to uplink and downlink carriers configured by the network device for the terminal device are 3.5 GHz, and a frequency band of a carrier to which the SUL belongs may be 2.6 GHz. The network device sends the downlink signal to the terminal device on the downlink carrier of the 3.5 GHz frequency band, and the terminal device may send the uplink signal to the network device on an uplink carrier of the 3.5 GHz frequency band or an uplink carrier of the 2.6 GHz frequency band. For example, a terminal device in a center area of a cell may send an uplink signal to the network device on the uplink carrier of the 3.5 GHz frequency band, and a terminal device in the edge area of the cell may send an uplink signal to the network device on the uplink carrier of the 2.6 GHz frequency band. It should be understood that an uplink carrier may also be referred to as a normal uplink (normal uplink, NUL), and a downlink carrier may also be referred to as a normal downlink (normal downlink, NDL).

A carrier to which an SUL belongs is configured with an access resource corresponding to a downlink of a frequency band of the carrier (an uplink resource). In this way, the uplink resource of the frequency band corresponding to the carrier is configured on the carrier to which the SUL belongs while an uplink resource of the frequency band corresponding to the SUL is also configured. Consequently, uplink resources of the carrier become limited. For example, FIG. 2 is a schematic diagram of carrier allocation. In FIG. 2, carrier resource allocation in a time division duplex (time division duplex, TDD) system is used as an example for description. As shown in FIG. 2, a carrier of a 3.5 GHz frequency band includes an uplink carrier and a downlink carrier. In this embodiment of this application, the downlink carrier is not filled, and the uplink carrier is filled by diagonal stripes. An SUL of the carrier of the 3.5 GHz frequency band is located in a 2.6 GHz frequency band, and is filled with vertical bars as shown in FIG. 2. A carrier of the 2.6 GHz frequency band is configured with both an access resource corresponding to a downlink of the 2.6 GHz frequency band and an uplink resource corresponding to a downlink of the 3.5 GHz frequency band (a resource occupied by the SUL). As a result, uplink resources of the carrier of the 2.6 GHz frequency band become limited.

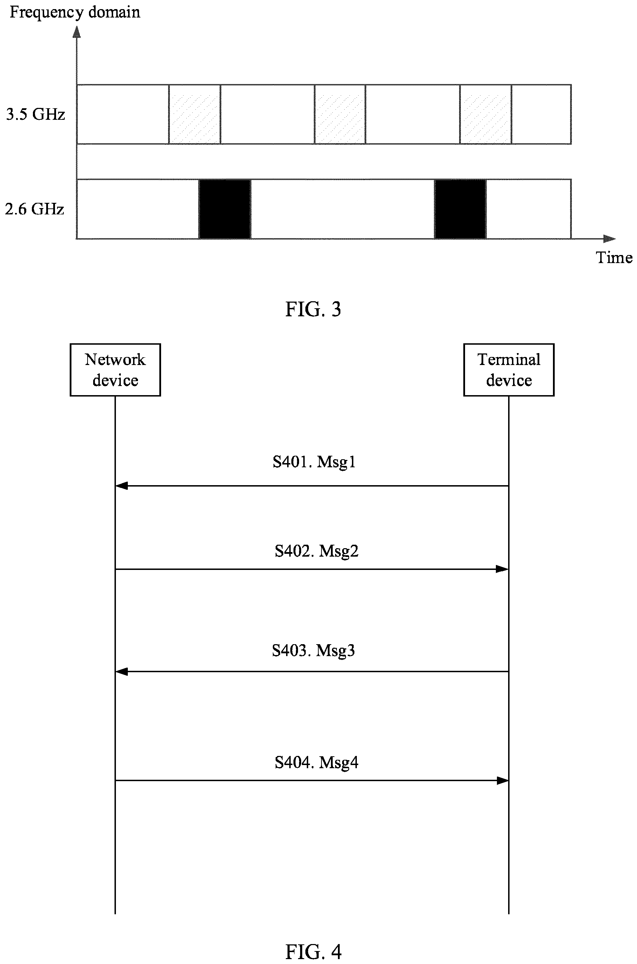

To reduce uplink resource occupation of the carrier to which the SUL belongs, in this embodiment of this application, a resource occupied by the SUL and a resource occupied by an NUL on the carrier to which the SUL belongs may be configured as one resource. For example, a same uplink resource on an uplink carrier of the 2.6 GHz frequency band is used for implementation of the SUL and an NUL of the carrier. It should be understood that, in this embodiment of this application, a resource that carries a preamble sequence during access to the network device on the SUL and a resource that carries a preamble sequence during access to the network device on the NUL may be configured as one resource by the network device. In other words, a PRACH resource that is configured by the network device and used during access to the network device on the SUL and a PRACH resource that is configured by the network device and used during access to the network device on the NUL are a same resource. FIG. 3 is a schematic diagram of another carrier allocation manner. As shown in FIG. 3, one same uplink resource on the uplink carrier of the 2.6 GHz frequency band may be used for implementation of the SUL and the NUL on the carrier, and the same uplink resource is painted black.

In this scenario, although uplink resource occupation on the carrier to which the SUL belongs is reduced, when the network device receives an uplink signal from the one same uplink resource, the network device cannot determine whether a frequency band of a downlink resource corresponding to an uplink resource carrying the uplink signal is 3.5 GHz or 2.6 GHz. Therefore, the network device cannot determine to use which downlink carrier to send a downlink signal. In other words, the network device cannot determine whether to use the downlink carrier of the 3.5 GHz frequency band or a downlink carrier of the 2.6 GHz frequency band to send the downlink signal. If the network device sends the downlink signal on an incorrect downlink carrier, the terminal device cannot receive the downlink signal from the network device, thereby causing a communication error.

To resolve the foregoing problem, an embodiment of this application provides an access method. During access to a network device, a terminal device may send, to the network device, a downlink carrier used by the terminal device to access the network device. In this way, the network device may determine a downlink carrier corresponding to an uplink signal on one same uplink resource, and then the network device may send a downlink signal to the terminal device by using the downlink carrier, to ensure that the terminal device can receive the downlink signal. It should be understood that the access method provided in this embodiment of this application may be applied to a TDD system, or may be applied to a system in which an SUL of a cell and an uplink of another cell occupy a same uplink resource.

It should be understood that the system shown in FIG. 1 in the embodiment of this application may be a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, an advanced long term evolution (advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunication system (universal mobile telecommunication system, UMTS), a worldwide interoperability for microwave access (worldwide interoperability for microwave access, WiMAX) communication system, a wireless local area network (wireless local area network, WLAN), wireless fidelity (wireless fidelity, Wi-Fi), a next-generation communication system, another communication system, or the like. Optionally, the NR system may also be referred to as a 5G system or a 5G network.

A network device in embodiments of this application may be a base station (Base Transceiver Station, BTS) in a GSM system or a CDMA system, a base station (NodeB, NB) in a WCDMA system, an evolved NodeB (Evolved NodeB, eNB or eNodeB) in an LTE system, a radio controller in a cloud radio access network (Cloud Radio Access Network, CRAN), a mobile switching center, a relay station, an access point, an in-vehicle device, a wearable device, a hub, a switch, a bridge, a router, a network side device in a 5G network, a network device in an evolved public land mobile network (Public Land Mobile Network, PLMN), or the like. When the communication system is an NR system, the network device may be a (radio) access network (radio access network, (R)AN) device in the NR system, and an (R)AN device in the NR system may be an access point (access point, AP) in a non-3GPP access network such as a Wi-Fi network, a next-generation base station (which may be collectively referred to as a next-generation radio access network node (NG-RAN node), where the next-generation base station includes a new radio NodeB (NR nodeB, gNB), a next-generation evolved NodeB (NG-eNB), a gNB in a form in which a central unit (central unit, CU) and a distributed unit (distributed unit, DU) are separated, and the like), a new radio controller (new radio controller, NR controller), a remote radio module, a micro base station, a relay (relay), a transmission reception point (transmission reception point, TRP), a transmission point (transmission point, TP), or another node. A specific technology and a specific device form that are used by the network device are not limited in embodiments of this application. For ease of description, in all embodiments of this application, all the foregoing apparatuses that provide a wireless communication function for the terminal device are collectively referred to as network devices.

In embodiments of this application, the terminal device may be any terminal. For example, the terminal device may be user equipment in machine type communication. The terminal device may also be referred to as user equipment (user equipment, UE), a mobile station (mobile station, MS), a mobile terminal (mobile terminal), a terminal (terminal), or the like. The terminal device may communicate with one or more core networks through a RAN. Therefore, the terminal device may also be referred to as a wireless terminal. The wireless terminal may be a device that provides a user with voice and/or data connectivity, a handheld device with a wireless connection function, or another processing device connected to a wireless modem. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, an in-vehicle device, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical) care, a wireless terminal in a smart grid (smart grid), a wireless terminal in transportation safety (transportation safety), a wireless terminal in a smart city (smart city), a wireless terminal in a smart home (smart home), or the like. The terminal device is not specifically limited in embodiments of this application.

In embodiments of this application, the network device and the terminal device may be deployed on the land, including an indoor device, an outdoor device, a handheld device, or an in-vehicle device; may be deployed on the water; or may be deployed on an airplane, a balloon, and a satellite in the air. An application scenario of the network device and the terminal device is not limited in embodiments of this application. Optionally, the system architecture in FIG. 1 may further include other network entities such as a network controller and a mobility management entity. This is not limited in this embodiment of this application.

Embodiments provided in this application may be applied to a process in which a terminal device accesses a network device. The terminal device may initiate random access in a plurality of possible scenarios. For example, the terminal device may initiate random access in the following scenarios: (1) After a status of the terminal device is switched from a radio resource control (radio resource control, RRC) idle state to an RRC connected state, the terminal device initiates random access in a process of establishing a radio link with the network device. (2) When establishment of the radio link between the terminal device and the network device fails, the terminal device initiates random access when reestablishing an RRC connection with the network device. (3) When the terminal device is in the RRC connected state and an uplink is out of synchronization, if uplink or downlink data arrives, the terminal device initiates random access. (4) When the terminal device is in the RRC connected state, but a dedicated resource for sending a scheduling request has not been configured for the terminal device on a physical uplink control channel (physical uplink control channel, PUCCH), the terminal device initiates random access. (5) When a scheduling request fails, the terminal device initiates random access. (6) The terminal device initiates random access during synchronization of an RRC reconfiguration request. (7) The terminal device is switched from an RRC inactive state to the RRC connected state, the terminal device initiates random access. (8) When requesting system information other than a master information block (master information block, MIB) and a system information block (system information block, SIB), the terminal device initiates random access. (9) The terminal device initiates random access when a beam failure is recovered.

Random access in embodiments of this application may include four-step random access (which may also be referred to as four-step random access channel, or 4-step RACH for short) and two-step random access (which may also be referred to as two-step random access channel, or 2-step RACH for short). For ease of understanding, the following separately describes a 4-step RACH process and a 2-step RACH process in detail.

FIG. 4 is a schematic flowchart of 4-step RACH. For specific details of 4-step RACH, refer to related provisions in the protocol TS38.300. As shown in FIG. 4, a 4-step RACH procedure may include the following steps.

S401. A terminal device sends Msg1 to a network device.

Msg1 may also be referred to as msg1 or MSG1. Msg1 is used to transmit a random access preamble, and the random access preamble may also be referred to as a random access preamble sequence, a preamble, or a preamble sequence. In this embodiment of this application, a resource occupied for sending the preamble is referred to as a physical random access channel (physical random access channel, PRACH) resource. Optionally, the terminal device may select a PRACH resource and a preamble, and send the selected preamble on the selected PRACH resource. If a manner of random access is contention-free random access, a base station may specify a PRACH resource and a preamble. The base station may estimate, based on the preamble sent by the terminal device, timing advance (timing advance, TA) and an uplink grant size required for transmitting Msg3 by the terminal device. In this embodiment of this application, the network device may broadcast an available PRACH resource by using a system broadcast message.

S402. The network device sends Msg2 to the terminal device.

Msg2 may also be referred to as msg2 or MSG2. Msg2 includes a resource that is configured by the network device for the terminal device to send a payload (payload). The payload may be understood as service data. After sending Msg1, the terminal device may open a random access response window (ra-Response Window), and monitor, within the random access response window, a physical downlink control channel (physical downlink control channel, PDCCH) scrambled by a random access radio network temporary identifier (random access radio network temporary identifier, RA-RNTI). After the terminal device successfully receives the PDCCH scrambled by the RA-RNTI, the terminal device can obtain a physical downlink shared channel (physical downlink shared channel, PDSCH) scheduled by the PDCCH, where a random access response (random access response, RAR) is included. Details of the RAR are not described in this embodiment of this application. If the terminal receives the PDCCH scrambled by the RAR-RNTI, and the RAR includes a preamble index sent by the terminal, it is considered that the terminal successfully receives the random access response. For contention-free random access, the random access procedure ends after the terminal successfully receives Msg2. For contention-based random access, after successfully receiving Msg2, the terminal device needs to continue to send Msg3 and receive Msg4.

S403. The terminal device sends Msg3 to the network device.

Msg3 may also be referred to as msg3 or MSG3. Msg3 is first scheduled transmission of the random access procedure. The terminal device sends service data, for example, an RRC connection request message or a tracking area update message, on a resource configured by the network device for the terminal device. Msg3 may notify the network device of an event that triggers the RACH procedure. For example, in an initial random access process, Msg3 carries a UE ID and an establishment cause (establishment cause); and for RRC reestablishment, an identification of UE in a connected state and an establishment cause (establishment cause) are carried.

S404. The network device sends Msg4 to the terminal device.

Msg4 may also be referred to as msg4 or MSG4. Msg4 indicates whether the terminal device successfully accesses the network device.

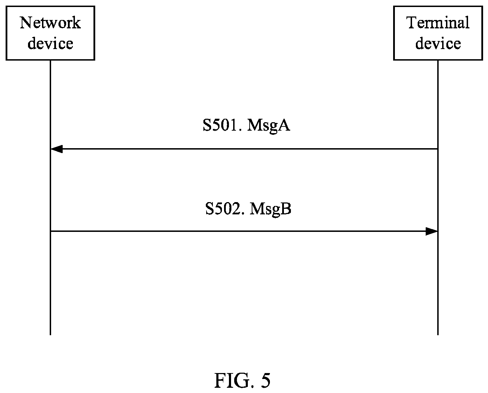

FIG. 5 is a schematic flowchart of 2-step RACH. As shown in FIG. 5, a 2-step RACH procedure may include the following steps.

S501. A terminal device sends MsgA to a network device.

MsgA may also be referred to as msgA or MSGA. MsgA includes a preamble and service data. Different from the foregoing 2-step RACH, the network device may configure, in a system broadcast message, an available PRACH resource (used to carry the preamble) and a resource that is used to carry the service data of the terminal device. This can simplify the random access procedure of the terminal device.

S502. The network device sends MsgB to the terminal device.

MsgB may also be referred to as msgB or MSGB. MsgB indicates whether the terminal device successfully accesses the network device.

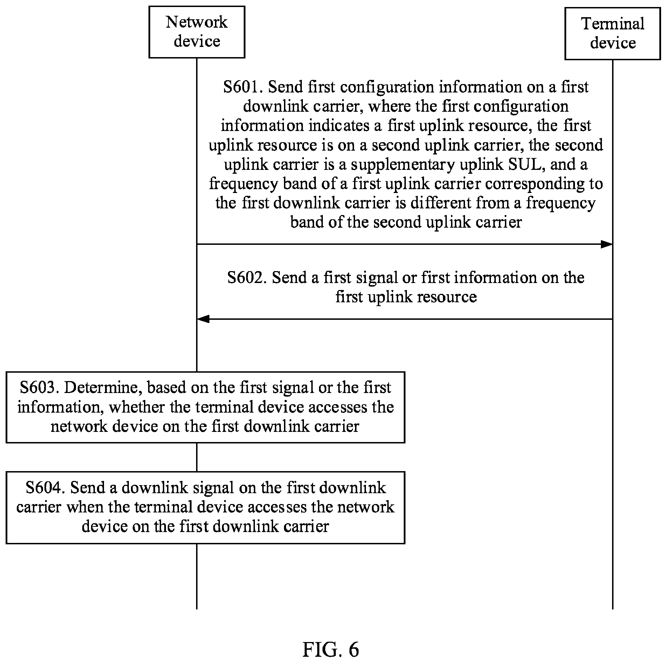

The following describes the access method in this embodiment of this application in detail with reference to specific embodiments. The following several specific embodiments may be combined with each other, and a same or similar concept or process may not be described repeatedly in some embodiments. FIG. 6 is a schematic flowchart of an embodiment of an access method according to an embodiment of this application. As shown in FIG. 6, the access method provided in this embodiment of this application may include the following steps.

S601. A network device sends first configuration information on a first downlink carrier, where the first configuration information indicates a first uplink resource, the first uplink resource is on a second uplink carrier, the second uplink carrier is a supplementary uplink SUL, and a frequency band of a first uplink carrier corresponding to the first downlink carrier is different from a frequency band of the second uplink carrier.

S602. A terminal device sends a first signal or first information on the first uplink resource.

S603. The network device determines, based on the first signal or the first information, whether the terminal device accesses the network device on the first downlink carrier.

S604. When the terminal device accesses the network device on the first downlink carrier, the network device sends a downlink signal on the first downlink carrier.

In S601, the first downlink carrier corresponds to the first uplink carrier. In this embodiment of this application, frequency bands corresponding to the first downlink carrier and the first uplink carrier may be the same. For example, both the frequency bands are 3.5 GHz, 4.9 GHz, or 6 GHz. Similarly, the second downlink carrier corresponds to the second uplink carrier.

In this embodiment of this application, the second uplink carrier is a supplementary uplink SUL. In other words, an uplink resource occupied by an SUL of the first uplink carrier is configured on the second uplink carrier. The second uplink carrier is used as an SUL, and the frequency band of the first uplink carrier may be different from that of the second uplink carrier. Optionally, to improve uplink coverage of a cell and enable the network device to receive an uplink signal of a terminal device in an edge area of the cell, the frequency band of the second uplink carrier may be lower than that of the first uplink carrier in this embodiment of this application. In this way, a path loss is smaller when a transmit power of the terminal device is the same, so that the network device can receive the uplink signal sent by the terminal device in the edge area of the cell. For example, when the frequency band of the first uplink carrier is 3.5 GHz or 4.9 GHz, the frequency band of the second uplink carrier may be 2.0 GHz, 2.3 GHz, or 2.6 GHz. When the frequency band of the first uplink carrier is 4.9 GHz, or even 6 GHz, the frequency band of the second uplink carrier may be a millimeter wave frequency band, for example, 3.5 GHz. In the following embodiment, an example in which the frequency band of the first uplink carrier is 3.5 GHz and the frequency band of the second uplink carrier is 2.6 GHz is used for description.

To enable the terminal device to send, to the network device during random access, a downlink carrier used by the terminal device for random access, the network device may send the first configuration information on the first downlink carrier in this embodiment of this application. The first configuration information may indicate the terminal device to feed back a downlink carrier used for accessing the network device, and the downlink carrier may be the first downlink carrier or the second downlink carrier. In other words, the first configuration information may indicate the terminal device to feed back whether the terminal device accesses the network device by using the SUL.

It should be understood that, in this embodiment of this application, the SUL and an NUL on the second uplink carrier occupy a same uplink resource on the second uplink carrier, in other words, an uplink resource that is on the second uplink carrier and that is used to access the network device through the SUL is the same as an uplink resource used to access the network device through the NUL. In this embodiment of this application, the first configuration information indicates the first uplink resource, and the first uplink resource is on the second uplink carrier, in other words, the first configuration information indicates the first uplink resource that is on the second uplink carrier. The first uplink resource may be different from a resource carrying a preamble sequence of the terminal device. The first uplink resource may be a PRACH resource, a physical uplink shared channel (physical uplink shared channel, PUSCH) resource, or the like on the second uplink carrier.

In this embodiment of this application, a possible implementation of indicating the first uplink resource by the first configuration information is as follows: The first configuration information may include an index of the uplink resource, where there may be a mapping relationship between the index of the uplink resource and the uplink resource on the second uplink carrier. Another possible implementation of indicating the first uplink resource by the first configuration information is as follows: The first configuration information may include a resource parameter of the first uplink resource. For example, the resource parameter may be a start position and a resource length of the first uplink resource on the second uplink carrier. Another possible implementation of indicating the first uplink resource by the first configuration information is as follows: The first configuration information may include an encoding result of a resource parameter of the first uplink resource. For example, the encoding result may be a result of encoding a start position and a resource length of the first uplink resource on the second uplink carrier. It should be understood that a manner in which the first configuration information indicates the first uplink resource is not limited in this embodiment of this application.

The first uplink resource may be used to carry the first signal or the first information from the terminal device. The first signal or the first information may be used to indicate that the downlink carrier used by terminal device to access the network device. In this embodiment of this application, the network device may send the first configuration information to the terminal device before or after receiving the preamble sequence from the terminal device. During random access by the terminal device, the network device may independently send the first configuration information, or the network device may send the first configuration information by using an existing message to carry the first configuration information. The existing message may be the system broadcast message or Msg2 in FIG. 4 or FIG. 5, or the like.

In S602, the terminal device may receive the first configuration information from the network device on the first downlink carrier. The terminal device may determine, based on the first configuration information, that downlink carrier used to access the network device needs to be fed back, in other words, determine to feed back, to the network device, whether the terminal device accesses the network device through the SUL. In this embodiment of this application, the terminal device may determine the first uplink resource based on the first configuration information. For example, the terminal device may determine the first uplink resource on the second uplink carrier based on the index of the uplink resource in the first configuration information and the mapping relationship between the index of the uplink resource and the uplink resource on the second uplink carrier; or the terminal device may determine the first uplink resource on the second uplink carrier based on the resource parameter of the first uplink resource, such as the start position and the resource length, in the first configuration information; or the terminal device may decode the resource parameter to obtain the resource parameter, and further determine the first uplink resource on the second uplink carrier based on the resource parameter. It should be understood that, in this embodiment of this application, a manner in which the terminal device determines the first uplink resource based on the first configuration information depends on a manner in which the first configuration information indicates the first uplink resource.

In this embodiment of this application, the terminal device may send the first signal or the first information on the first uplink resource, to indicate the downlink carrier used by the terminal device to access the network device. The first information may include content indicating the downlink carrier used by the terminal device to access the network device, for example, an identifier or an indication bit of the downlink carrier. The first signal may be a discrete signal, for example, a sequence or a preamble sequence. Different from the first information, the first signal does not carry the foregoing content. Whether the terminal device sends the first signal or the first information to the network device depends on the first uplink resource allocated by the network device to the terminal device. If the first uplink resource is a PRACH resource, information carried on the PRACH resource is limited. In this case, the terminal device may send the first signal on the PRACH resource, for example, a signal occupying less resources, such as a sequence or a preamble sequence. If the first uplink resource is a PUSCH resource, the PUSCH resource can carry a large amount of information. In this case, the terminal device may send the first information on the PUSCH resource. For example, the first information may be an indication bit. Optionally, a manner in which the first signal indicates that the terminal device accesses the network device through the SUL may be as follows: The first uplink resource is used to carry a sequence, where the sequence indicates that the terminal device accesses the network device through the SUL. Alternatively, the manner in which the first information indicates that the terminal device accesses the network device through the SUL may be as follows: The first uplink resource may include a bit indicating that the terminal device accesses the network device through the SUL. For example, 1 may represent that the terminal device accesses the network device through the SUL, and 0 may represent that the terminal device accesses the network device through the NUL on the second uplink carrier.

For example, if the network device sends the first configuration information on a first downlink carrier of a 3.5 GHz frequency band, a terminal device that accesses the network device on the first downlink carrier of the 3.5 GHz frequency band can receive the first configuration information, however, a terminal device that accesses the network device on a first downlink carrier of a 2.6 GHz frequency band cannot receive the first configuration information. For terminal devices that can receive the first configuration information, a terminal device that accesses the network device through the SUL may feed back the first signal or the first information on the first uplink resource of the second uplink carrier. The first signal or the first information is used to represent that the downlink carrier used by the terminal device to access the network device is the first downlink carrier, in other words, the first signal or the first information represents that the terminal device accesses the network device through the SUL. In other words, the first uplink resource may include the bit 1 indicating that the terminal device accesses the network device through the SUL, or the bit does not include a bit value. It should be noted that, in this embodiment of this application, because the terminal device that accesses the network device on the first downlink carrier of the 2.6 GHz frequency band cannot receive the first configuration information, the terminal device does not feed back, to the network device during random access, the second downlink carrier used to access the network device.

In S603, if the network device receives preamble sequences from two terminal devices on a same uplink resource of the second uplink carrier, whether a downlink carrier corresponding to the preamble sequence is the first downlink carrier or the second downlink carrier cannot be determined according to the current technical solution. In this embodiment of this application, the network device may receive the first signal or the first information from the terminal device on the first uplink resource. Therefore, the network device may determine, based on the first signal or the first information, the downlink carrier corresponding to the preamble sequence. For example, in this embodiment of this application, the downlink carrier corresponding to the preamble sequence may be determined based on the downlink carrier indicated by the first signal or the first information. For example, if the first information includes the indication bit 1, it can be determined that the downlink carrier corresponding to the preamble sequence is the first downlink carrier.

In S604, in this embodiment of this application, the network device may distinguish which the downlink carrier is used by the terminal device to access the network device. When the terminal device accesses the network device on the first downlink carrier, the network device can send a downlink signal on the first downlink carrier. When the terminal device accesses the network device on the second downlink carrier, the network device sends a downlink signal on the second downlink carrier. It should be understood that the downlink signal may be a signal sent by the terminal device to the network device during random access in FIG. 4 or FIG. 5. For example, if the terminal device accesses the network device on the first downlink carrier of the 3.5 GHz frequency band, the network device may send the downlink signal on the first downlink carrier of the 3.5 GHz frequency band. If the terminal device accesses the network device on the second downlink carrier of 2.6 GHz frequency band, the network device may send the downlink signal on the second downlink carrier of the 2.6 GHz frequency band.

The access method provided in this embodiment of this application includes: A network device sends first configuration information on a first downlink carrier, where the first configuration information indicates a first uplink resource on a second uplink carrier; the terminal device sends a first signal or first information on the first uplink resource; the network device determines, based on the first signal or the first information, whether the terminal device accesses the network device on the first downlink carrier; and when the terminal device accesses the network device on the first downlink carrier, the network device sends a downlink signal on the first downlink carrier. In this embodiment of this application, during random access by the terminal device, the network device may configure, for the terminal device, the first uplink resource on which the downlink carrier used to access the network device can be fed back. Therefore, the terminal device can feed back, on the first uplink resource, the downlink carrier used to access the network device. In this way, the network device can distinguish which downlink carrier is used by the terminal device to access the network device, and the network device may send the downlink signal on the downlink carrier corresponding to the terminal device. As a result, the terminal device can receive the downlink signal from the network device.

Based on the foregoing embodiment, during random access by the terminal device, the network device may independently send the first configuration information to the terminal device. However, in embodiments of this application, to reduce signaling exchanged between the terminal device and the network device during random access, the first configuration information may be carried in a current message exchanged between the terminal device and the network device during 4-step RACH or 2-step RACH. In the 4-step RACH scenario, the network device sends the first configuration information to the terminal device in two manners. A first manner is to use the system broadcast message to carry the first configuration information. In a second manner, Msg2 carries the first configuration information. In the 2-step RACH scenario, the network device sends the first configuration information to the terminal device by using the system broadcast message to carry the first configuration information. It should be understood that in the three manners, to save the uplink resources on the second uplink carrier, the network device may configure a same time-domain frequency-domain code-domain resource for the SUL and the NUL that is on the second uplink carrier. In other words, for example, in this embodiment of this application, the network device may send fourth configuration information on the second downlink carrier corresponding to the second uplink carrier, where the fourth configuration information indicates a fourth uplink resource on the second uplink carrier, and the fourth uplink resource is used to carry a preamble sequence. The foregoing "the network device may configure a same time-domain frequency-domain code-domain resource for the SUL and the NUL that is on the second uplink carrier" may be understood as follows: The fourth uplink resource and the uplink resource that is configured by the network device for the SUL and that carries the preamble sequence may occupy a same time-domain frequency-domain code-domain resource on the second uplink carrier. It should be understood that the fourth configuration information may be carried in the system broadcast message.

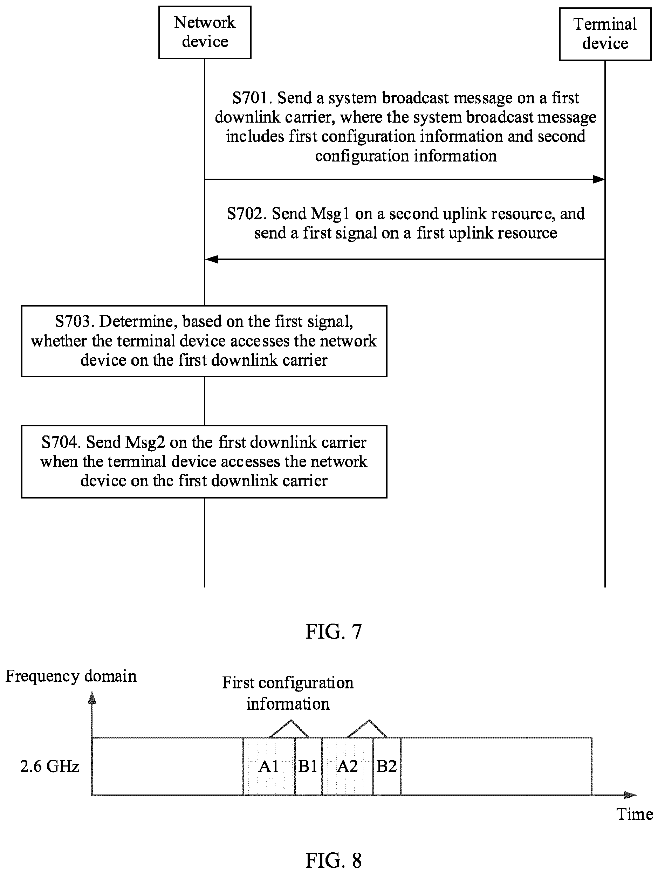

The following first describes the access method provided in the embodiment of this application with reference to the first manner used in the 4-step RACH scenario. FIG. 7 is a schematic flowchart of another embodiment of the access method provided in the embodiment of this application. As shown in FIG. 7, the access method provided in this embodiment of this application may include the following steps.

S701. The network device sends the system broadcast message on the first downlink carrier, where the system broadcast message includes first configuration information and second configuration information.

S702. The terminal device sends Msg1 to the network device on the second uplink resource, and sends the first signal to the network device on the first uplink resource.

S703. The network device determines, based on the first signal, whether the terminal device accesses the network device on the first downlink carrier.

S704. When the terminal device accesses the network device on the first downlink carrier, the network device sends Msg2 to the terminal device on the first downlink carrier.

In this embodiment of this application, after S704, S403 and S404 in FIG. 4 may be further included.

In S701, currently, the network device may periodically send the system broadcast message on the first downlink carrier. The system broadcast message in this embodiment of this application may include the first configuration information and the second configuration information. In this embodiment of this application, a system information block (system information block, SIB) of the system broadcast message may carry the first configuration information and the second configuration information. The second configuration information indicates a second uplink resource on a second uplink carrier, and the second uplink resource is used to carry a preamble sequence. For example, each cell may correspond to 64 available preamble sequences. One preamble sequence may correspond to one second uplink resource, or a plurality of preamble sequences correspond to one second uplink resource, or one preamble sequence corresponds to a plurality of second uplink resources. For example, if one preamble sequence corresponds to one time-domain frequency-domain resource on the second uplink carrier, the 64 preamble sequences correspond to 64 resources with an independent time domain resource, frequency domain resource, and code domain resource, or a plurality of preamble sequences may correspond to one resource determined based on "a time domain, frequency domain, and code domain". For a manner in which the second configuration information indicates the second uplink resource, refer to related descriptions of the first configuration information.

In addition to configuring the second uplink resource carrying the preamble sequence in the system broadcast message, the network device may further configure the first uplink resource carrying the first signal or the first information in this embodiment of this application, which is different from the technical solution shown in FIG. 4. In this embodiment of this application, both the first uplink resource and the second uplink resource may be PRACH resources on the second uplink carrier, where the first uplink resource is used to carry the first signal, and the first signal may be a sequence. Preamble sequences and sequences correspond. For example, one preamble sequence carried on the second uplink resource corresponds to one sequence carried on the first uplink resource, or a plurality of preamble sequences carried on the second uplink resource correspond to one sequence carried on the first uplink resource. FIG. 8 is a schematic diagram of resource allocation according to an embodiment of this application. FIG. 8 shows two different second uplink resources A1 and A2 on a second uplink carrier. A1 is used to carry a preamble sequence 1, and A2 is used to carry a preamble sequence 2. The second uplink resource A1 corresponds to a first uplink resource B 1, where B1 is used to carry a sequence 1. The second uplink resource A2 corresponds to a first uplink resource B2, where B2 is used to carry a sequence 2. Correspondingly, the preamble sequence 1 corresponds to the sequence 1, and the preamble sequence 2 corresponds to the sequence 2. For example, in FIG. 8, one preamble sequence corresponds to one sequence. Optionally, the second uplink resource A1 may be further used to carry a preamble sequence 3. In other words, the preamble sequence 1 and the preamble sequence 3 that are carried on the second uplink resource A1 correspond to the sequence 1 carried on the first uplink resource B1.

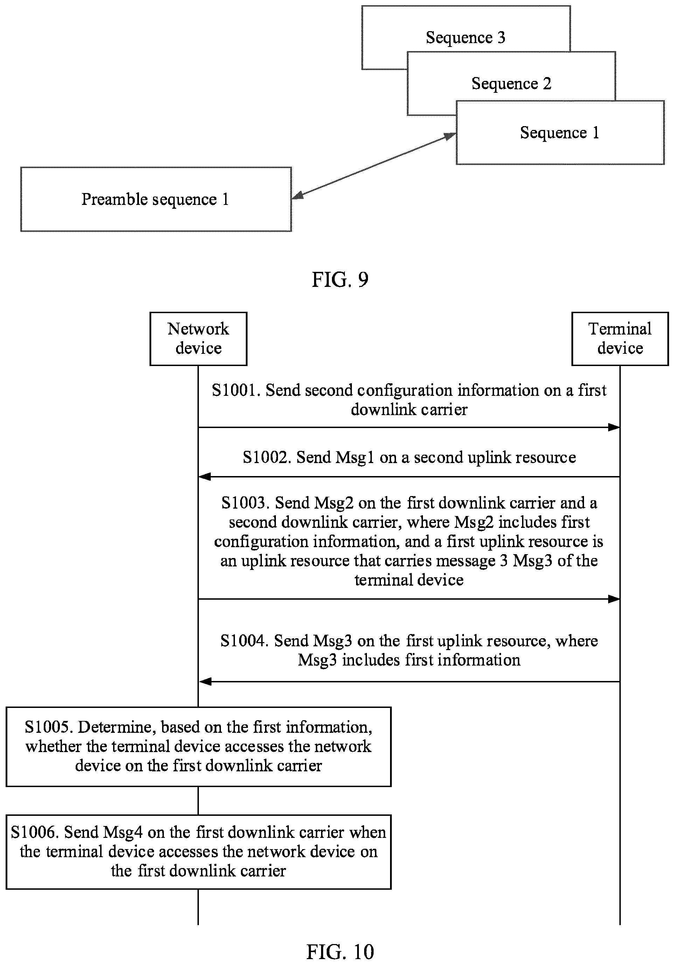

In S702, after receiving the system broadcast message, the terminal device may determine the first uplink resource and the second uplink resource on the second uplink carrier. For a manner in which the terminal device determines the second uplink resource on the second uplink carrier, refer to related descriptions of the terminal device determining the first uplink resource on the second uplink carrier. In this embodiment of this application, the terminal device may send Msg1 to the network device on the second uplink resource, where Msg1 may include a preamble sequence. For this process, refer to related descriptions in S401. Because Msg1 is used to carry the preamble sequence, and the second uplink resource and a fourth uplink resource in this embodiment of this application may be the same, the terminal device may send the first signal on the first uplink resource in this embodiment of this application, so that the network device can distinguish which downlink carrier is used by the terminal device to access the network device. The first signal may be a sequence. To be specific, the first signal may be carried in a sequence form. It should be understood that the sequence in this embodiment of this application may be a discrete signal carried on the first uplink resource. The first signal is used to indicate that the terminal device accesses the network device on the first downlink carrier. FIG. 9 is a schematic diagram of a correspondence between a preamble sequence and a sequence according to an embodiment of this application. As shown in FIG. 9, when sending the preamble sequence 1 on the second uplink resource, the terminal device may send, on the first uplink resource, the sequence 1 (for example, a Seq set1) corresponding to the preamble sequence 1.

In S703, the network device may receive Msg1 on the second uplink resource. When detecting the preamble sequence in Msg1, the network device may detect, on the first uplink resource corresponding to the second uplink resource, whether there is the first signal from the terminal device. If detecting that the first uplink resource carries the first signal, the network device may determine that the terminal device accesses the network device on the first downlink carrier.

In S704, because the terminal device accesses the network device on the first downlink carrier, the network device may send Msg2 on the first downlink carrier in this embodiment of this application, so that the terminal device successfully receives Msg2.

In this embodiment of this application, the network device may configure, in the system broadcast message of 4-step RACH, the first uplink resource carrying the first signal, and the terminal device may feed back, on the first uplink resource, the downlink carrier used to access the network device. In this way, the network device can distinguish which downlink carrier is used by the terminal device to access the network device.

The following describes the access method provided in the embodiment of this application with reference to the second manner used in the 4-step RACH scenario. FIG. 10 is a schematic flowchart of still another embodiment of the access method provided in the embodiment of this application. As shown in FIG. 10, the access method provided in this embodiment of this application may include the following steps.

S1001. The network device sends second configuration information on the first downlink carrier.

S1002. The terminal device sends Msg1 to the network device on the second uplink resource.

S1003. The network device sends Msg2 on the first downlink carrier and the second downlink carrier, where Msg2 includes the first configuration information, and the first uplink resource is an uplink resource that carries message 3 Msg3 of the terminal device.

S 1004. The terminal device sends Msg3 to the network device on the first uplink resource, where Msg3 includes the first information.

S1005. The network device determines, based on the first information, whether the terminal device accesses the network device on the first downlink carrier.

S 1006. When the terminal device accesses the network device on the first downlink carrier, the network device sends Msg4 to the terminal device on the first downlink carrier.

For S1002 in this embodiment of this application, refer to related descriptions in S401. The second configuration information in S1001 indicates the second uplink resource on the second uplink carrier, and the second uplink resource is used to carry the preamble sequence. For this step, refer to the current technical solution in which a network device configures, for a terminal device, an uplink resource carrying a preamble sequence.

In S1003, because Msg1 is used to carry the preamble sequence, and the second uplink resource and the fourth uplink resource in embodiments of this application are the same, after receiving the preamble sequence on the second uplink resource, the network device cannot determine whether the downlink carrier used by the terminal device to access the network device is the first downlink carrier or the second downlink carrier. In this embodiment of this application, the network device may send Msg2 on both the first downlink carrier and the second downlink carrier, to ensure that the terminal device can receive the uplink resource that is configured by the network device for the terminal device and that carries message 3 Msg3, so as to ensure that the terminal device successfully accesses the network device. Msg2 includes the first configuration information, and the first uplink resource indicated by the first configuration information is an uplink resource carrying service data of the terminal device, where the service data may be Msg3. It should be understood that the uplink resource that is configured by the network device for the terminal device and that carries Msg3 may be a PUSCH resource on the second uplink carrier. Optionally, in this embodiment of this application, the network device may allocate, on the PUSCH resource, a bit for carrying the first information.

In S1004, the first uplink resource in this embodiment of this application may be used to carry the first information because the first uplink resource may be the PUSCH resource on the second uplink carrier, which can carry more information compared with the first uplink resource shown in FIG. 7. The terminal device may send Msg3 to the network device on the first uplink resource, where Msg3 may include the first information. In other words, in this embodiment of this application, the terminal device may send Msg3 on the PUSCH resource, and may further use the PUSCH resource to carry the first information. It should be understood that when receiving Msg2 on the first downlink carrier, the terminal device may determine, based on the downlink carrier used by the terminal device to access the network device, whether to use the PUSCH resource to carry the first information. The first information is used to indicate that the terminal device accesses the network device on the first downlink carrier. For example, the terminal device may use the bit allocated by the network device on the PUSCH resource to carry the first information.

In S1005, when receiving Msg3 on the first uplink resource, the network device may detect whether a corresponding bit on the first uplink resource carries the first information. If it is detected that the corresponding bit on the first uplink resource carries the first information, it can be determined that the terminal device accesses the network device on the first downlink carrier.

In S1006, because the terminal device accesses the network device on the first downlink carrier, the network device may send Msg4 on the first downlink carrier to the terminal device in this embodiment of this application.

In this embodiment of this application, the network device may configure, in Msg2 of 4-step RACH, the first uplink resource carrying the first information, and the terminal device may feed back, on the first uplink resource, the downlink carrier used to access the network device. In this way, the network device can distinguish which downlink carrier is used by the terminal device to access the network device.

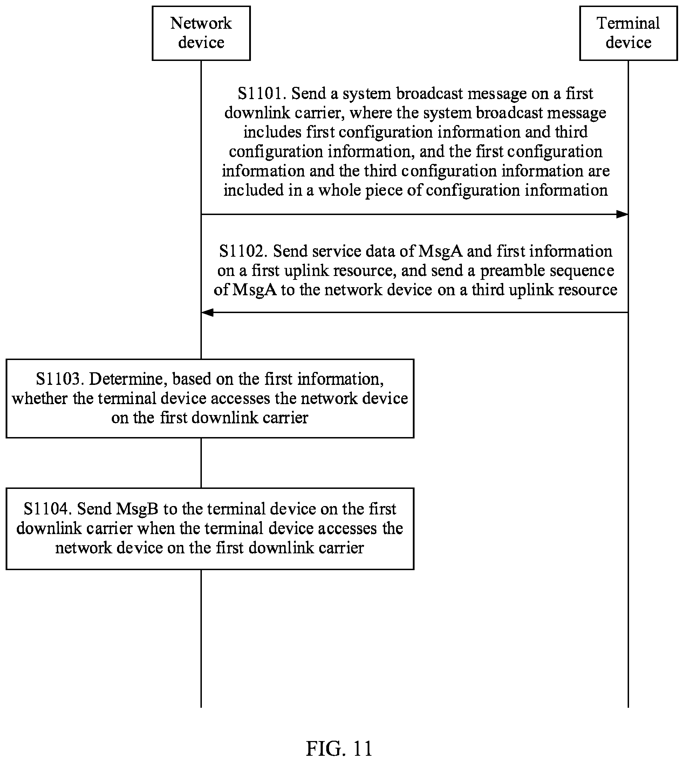

The following describes the access method provided in the embodiment of this application with reference to the 2-step RACH scenario. FIG. 11 is a schematic flowchart of yet another embodiment of the access method provided in the embodiment of this application. As shown in FIG. 11, the access method provided in this embodiment of this application may include the following steps.

S 1101. The network device sends the system broadcast message on the first downlink carrier, where the system broadcast message includes first configuration information and third configuration information, and the first configuration information and the third configuration information are included in a whole piece of configuration information.

S1102. The terminal device sends service data of MsgA and the first information to the network device on the first uplink resource, and sends a preamble sequence of the MsgA to the network device on a third uplink resource.

S1103. The network device determines, based on the first information, whether the terminal device accesses the network device on the first downlink carrier.

S1104. When the terminal device accesses the network device on the first downlink carrier, the network device sends MsgB to the terminal device on the first downlink carrier.

Based on a difference between 2-step RACH and 4-step RACH, a difference between S1101 in this embodiment of this application and S701 is that the system broadcast message includes the first configuration information and the third configuration information. The first configuration information and the third configuration information may be configured in a whole piece of configuration information. In other words, the system broadcast message includes configuration information, and the configuration information includes the first configuration information and the third configuration information. In this embodiment of this application, a SIB of the system broadcast message may carry the first configuration information and the third configuration information. It should be noted that for 2-step RACH, the terminal device may use a message (MsgA) to carry the preamble sequence and the service data. Therefore, the configuration information in the system broadcast message in this embodiment of this application needs to be used to configure, for the terminal device, an uplink resource for carrying the service data and an uplink resource for carrying the preamble sequence. Correspondingly, the third configuration information in this embodiment of this application indicates the third uplink resource on the second uplink carrier, where the third uplink resource is used to carry the preamble sequence. It should be understood that for a manner in which the third configuration information indicates the third uplink resource, reference should be made to related descriptions of the first configuration information indicating the first uplink resource in the foregoing embodiment.

In this embodiment of this application, the third uplink resource and the fourth uplink resource may be the same. Therefore, in this embodiment of this application, the first configuration information may be carried in the system broadcast message, the first configuration information indicates the first uplink resource, and the first uplink resource is the uplink resource used to carry the service data of the terminal device, where the first uplink resource is also used to carry the first signal or the first information. In this embodiment of this application, the first uplink resource may be used to carry the first information because the first uplink resource may be the PUSCH resource on the second uplink carrier, and the PUSCH resource can carry more information compared with the first uplink resource shown in FIG. 7. In other words, in this embodiment of this application, the terminal device may send the service data on the PUSCH resource, and may further use the PUSCH resource to carry the first information. Optionally, in this embodiment of this application, the network device may allocate, on the PUSCH resource, a bit for carrying the first information. There is a correspondence between the preamble sequence carried in the third configuration information and the PUSCH resource indicated by the first configuration information. The system broadcast message may carry the correspondence.

In S1102, after receiving the system broadcast message, the terminal device may determine the first uplink resource based on the first configuration information, and determine the third uplink resource based on the third configuration information. The terminal device may send, on the first uplink resource, the information carried on the PUSCH resource in MsgA, where the information carried on the PUSCH resource includes the service data and the first information of the terminal device. The terminal device may send the preamble sequence of MsgA on the third uplink resource. In other words, the terminal device sends the service data of MsgA and the first information on the first uplink resource (the PUSCH resource), and the terminal device sends the preamble sequence of MsgA on the third uplink resource. The first information indicates that the terminal device accesses the network device on the first downlink carrier. In other words, the terminal device uses the PUSCH resource to carry the first information, and the first information indicates that the terminal device accesses the network device through the SUL. It should be understood that for a manner of determining the third uplink resource by the terminal device based on the third configuration information, reference should be made to the descriptions of the terminal device determining the first uplink resource based on the first configuration information in the foregoing embodiment.

In S1103, after receiving the preamble sequence on the third uplink resource, the network device may detect whether there is the first information on the PUSCH resource corresponding to the preamble sequence. If the PUSCH resource carries the first information, it can be determined that the terminal device accesses the network device on the first downlink carrier, that is, it can be determined that the terminal device accesses the network device through the SUL. For example, the network device may check the bit on the PUSCH resource, and detect whether the PUSCH resource carries the first information. If the bit of the PUSCH resource carries the first information, it is determined that the terminal device accesses the network device through the SUL.

In S1104, because the terminal device accesses the network device on the first downlink carrier, the network device may send MsgB on the first downlink carrier to the terminal device in this embodiment of this application.

In this embodiment of this application, the network device may configure, in the system broadcast message of 2-step RACH, the first uplink resource carrying the first information, and the terminal device may feed back, on the first uplink resource, the downlink carrier used to access the network device. In this way, the network device can distinguish which downlink carrier is used by the terminal device to access the network device.

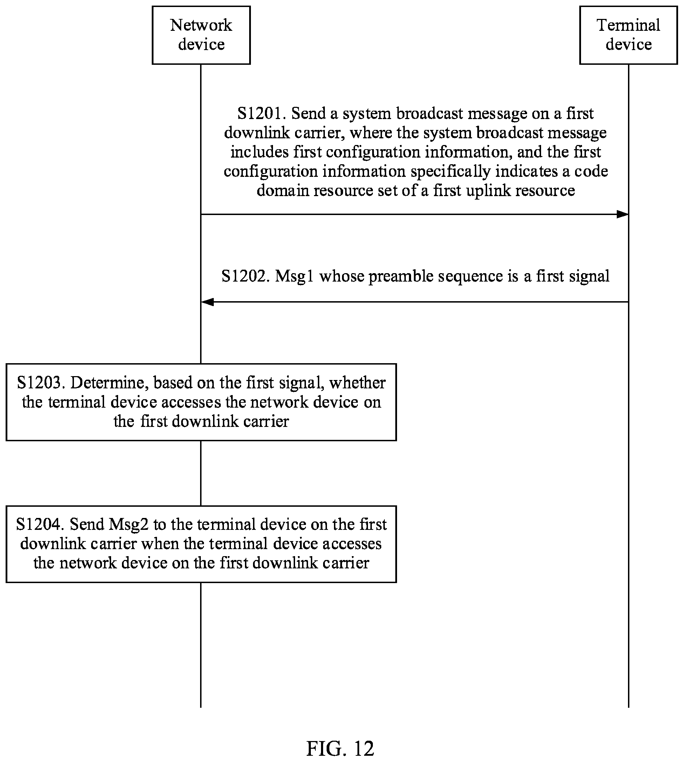

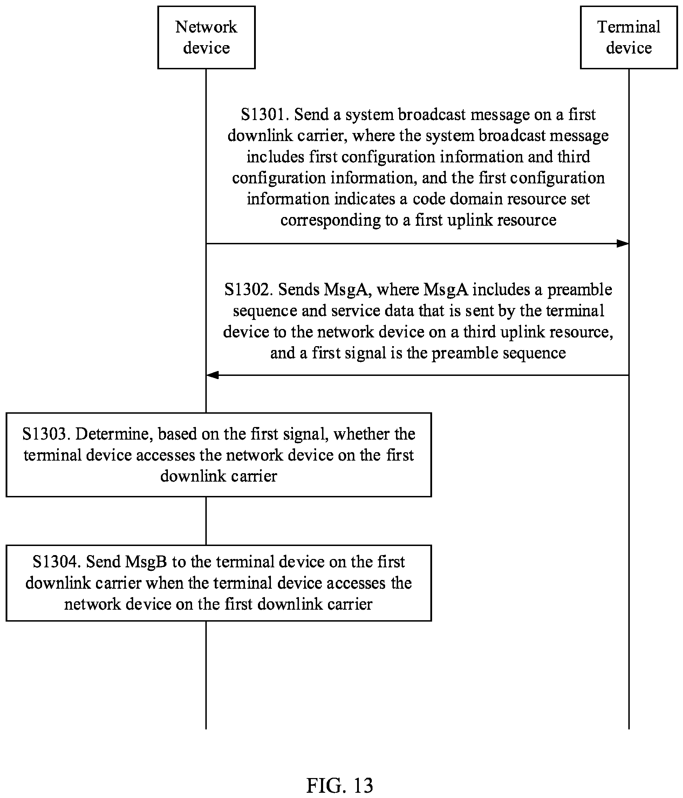

The technical solutions in FIG. 7, FIG. 10, and FIG. 11 are as follows. During access by a terminal device to a network device, a message sent by the network device to the terminal device may carry first configuration information, to configure a first uplink resource carrying a first signal or first information. FIG. 12 further provides another access method. In the method shown in FIG. 12, the network device may preconfigure a code domain resource set of the preamble sequence used when the terminal device accesses the network device on the first downlink carrier. When the terminal device sends the preamble sequence carried in the code domain resource set, the network device may determine that the terminal device accesses the network device on the first downlink carrier. It should be understood that, in this embodiment of this application, the fourth uplink resource and the resource that is configured by the network device for the SUL and that carries the preamble sequence occupy different time-domain frequency-domain resources on the second uplink carrier, so that the network device may determine, based on a time domain, a frequency domain, and a code domain of the resource carrying the preamble sequence, whether the terminal device accesses the network device through the SUL. In this embodiment of this application, to reduce uplink resource occupation on the second uplink carrier, the fourth uplink resource and the resource that is configured by the network device for the SUL and that carries the preamble sequence may occupy a same time-domain frequency-domain resource on the second uplink carrier. In this way, the network device may determine, based on a code domain resource carrying the preamble sequence, whether the terminal device accesses the network device through the SUL. Both FIG. 12 and FIG. 13 are described by using an example in which the resource that is configured by the network device for the SUL and that carries the preamble sequence and the fourth uplink resource occupy a same time-domain frequency-domain resource on the second uplink carrier.

The following describes the access method provided in the embodiment of this application with reference to the 4-step RACH scenario. FIG. 12 is a schematic flowchart of still yet another embodiment of the access method provided in the embodiment of this application. As shown in FIG. 12, the access method provided in this embodiment of this application may include the following steps.

S1201. The network device sends the system broadcast message on the first downlink carrier, where the system broadcast message includes first configuration information, and the first configuration information specifically indicates a code domain resource set of the first uplink resource.

S1202. The terminal device sends Msg1 to the network device, where the first signal is a preamble sequence of Msg1.

S 1203. The network device determines, based on the first signal, whether the terminal device accesses the network device on the first downlink carrier.

S1204. When the terminal device accesses the network device on the first downlink carrier, the network device sends Msg2 to the terminal device on the first downlink carrier.

For S1204 in this embodiment of this application, refer to the related descriptions of S704.

In S1201, different from that in the technical solutions of FIG. 7, FIG. 10, and FIG. 11, the first configuration information in the system broadcast message in this embodiment of this application indicates the code domain resource set of the first uplink resource, and the first uplink resource is used to carry the preamble sequence. In the technical solutions in FIG. 7, FIG. 10, and FIG. 11, the second uplink resource and the fourth uplink resource occupy a same time-domain frequency-domain code-domain resource on the second uplink carrier, or the third uplink resource and the fourth uplink resource occupy a same time-domain frequency-domain code-domain resource on the second uplink carrier, and therefore, the network device needs to additionally configure an uplink resource for the terminal device to feed back the first signal or the first information. However, in this embodiment of this application, the first uplink resource and the fourth uplink resource occupy a same time-domain frequency-domain resource on the second uplink carrier, but may occupy different code domain resources. Therefore, the network device may configure a code domain resource set for the terminal device that accesses the network device through the SUL, and the network device may determine, based on the code domain carrying the preamble sequence, whether the terminal device accesses the network device through the SUL. A preamble sequence in the code domain resource set indicates that the terminal device accesses the network device on the first downlink carrier.

In this embodiment of this application, a manner in which the first configuration information indicates the code domain resource set of the first uplink resource may be as follows: The first configuration information may include a code domain parameter of the first uplink resource, for example, a start position and a resource length of a code domain. For example, the network device may use the first configuration information to carry new information, to indicate a code domain range of the first uplink resource. For example, two entries, which are total Number Of RA-Preambles and total Number Of SUL-Preambles, may be introduced in an RACH-Config Common field, where total Number Of RA-Preambles represents a start ID of a code domain resource, and total Number Of SUL-Preambles represents a quantity of IDs in a code domain resource set. When total Number Of RA-Preambles is 30, and total Number Of SUL-Preambles is 10, a code domain resource set of the first uplink resource includes 10 code domains whose IDs range from 30 to 39. For example, a code domain resource set including 10 code domains whose IDs range from 30 to 39 is configured by the network device for the preamble sequence used when the terminal device accesses the network device on the first downlink carrier. Optionally, a code domain resource set including 10 code domains whose IDs range from 40 to 49 is configured by the network device for a preamble sequence used when the terminal device accesses the network device on the second downlink carrier. In this embodiment of this application, a SIB of the system broadcast message may carry the first configuration information.

In S1202, the terminal device may determine, based on the downlink carrier used to access the network device, to send Msg1 in a corresponding code domain resource set, in other words, to send the preamble sequence in a corresponding code domain resource set. It should be understood that, in this embodiment of this application, the first uplink resource is the PRACH resource carrying the preamble sequence, and the preamble sequence may be the first signal. The preamble sequence may indicate the downlink carrier used by the network device to access the terminal device. For example, if the terminal device accesses the network device on the first downlink carrier, the network device may determine a used preamble sequence in the code domain resource set including the code domains from 30 to 39.

In S1203, the network device can determine, based on the preamble sequence, whether the terminal device accesses the network device on the first downlink carrier. In this embodiment of this application, the network device may determine, based on a code domain resource set including the code domain resource carrying the preamble sequence, whether the terminal device accesses the network device on the first downlink carrier. The preamble sequence in the code domain resource set indicates that the terminal device accesses the network device on the first downlink carrier. For example, if the code domain resource set including the code domain resource carrying the preamble sequence includes the 10 code domains ranging from 30 to 39, the network device can determine that the terminal device accesses the network device on the first downlink carrier, that is, the terminal device accesses the network device through the SUL. If the code domain resource set including the code domain resource carrying the preamble sequence includes the 10 code domains ranging from 40 to 49, the network device can determine that the terminal device accesses the network device on the second downlink carrier.

In this embodiment of this application, the network device may configure, in the system broadcast message of 4-step RACH, the code domain resource set of the first uplink resource carrying the first signal. When the preamble sequence is carried, the terminal device may feed back the downlink carrier used to access the network device. The network device may determine, based on whether the code domains of the resource carrying the preamble sequence are in the code domain resource set, the downlink carrier used by the terminal device to access the network device.

The following describes the access method provided in the embodiment of this application with reference to the 2-step RACH scenario. FIG. 13 is a schematic flowchart of a further embodiment of the access method provided in the embodiment of this application. As shown in FIG. 13, the access method provided in this embodiment of this application may include the following steps.

S1301. The network device sends the system broadcast message on the first downlink carrier, where the system broadcast message includes first configuration information and third configuration information, and the first configuration information indicates a code domain resource set corresponding to the first uplink resource.

S 1302. The terminal device sends MsgA to the network device, where MsgA includes a preamble sequence and the service data that is sent by the terminal device to the network device on a third uplink resource, and the first signal is the preamble sequence.

S1303. The network device determines, based on the first signal, whether the terminal device accesses the network device on the first downlink carrier.

S 1304. When the terminal device accesses the network device on the first downlink carrier, the network device sends MsgB to the terminal device on the first downlink carrier.

For S1304 in this embodiment of this application, refer to the related descriptions of S 1104 in the foregoing embodiment. For the first configuration information in S1301, refer to related descriptions of the first configuration information in S 1201. For the third configuration information, refer to related descriptions of the third configuration information in S1 101. For the preamble sequence included in MsgA in S1302, refer to related descriptions of the preamble sequence in Msg1 in S1202 in the foregoing embodiment. For a manner in which the network device determines whether the terminal device accesses the network device on the first downlink carrier in S1303, refer to related descriptions in S 1202.

In this embodiment of this application, the network device may configure, in the system broadcast message of 2-step RACH, the code domain resource set of the first uplink resource carrying the first signal. For a technical effect of this embodiment, refer to the technical effect in FIG. 12.

The second uplink carrier is the SUL. The foregoing embodiment explains that a resource corresponding to an SUL of the 3.5 GHz frequency band may be configured on the second uplink carrier of the 2.6 GHz frequency band, and a resource corresponding to an SUL of the 4.9 GHz frequency band may also be configured on the second uplink carrier. In this scenario, the SUL of 4.9 GHz frequency band and the SUL of 3.5 GHz frequency band may occupy a same uplink resource on the second uplink carrier; the network device may allocate a third uplink carrier and a third downlink carrier to the frequency band at 4.9 GHz; and a frequency band of the third uplink carrier corresponding to the third downlink carrier is different from that of the first uplink carrier. The frequency band of the third uplink carrier may be higher or lower than that of the first uplink carrier. Similar to S601, the network device may send fifth configuration information on the third downlink carrier. The fifth configuration information indicates a fifth uplink resource, where the fifth uplink resource is on the second uplink carrier, and the fifth uplink resource is used to carry the first signal or the first information. For the fifth configuration information, refer to related descriptions of the first configuration information in the foregoing embodiment. For the fifth uplink resource, refer to related descriptions of the first uplink resource in the foregoing embodiment.

The network device may configure different uplink resources for the SUL of the 4.9 GHz frequency band and the SUL of the 3.5 GHz frequency band to carry the preamble sequence. However, in this embodiment of this application, to reduce uplink resource occupation on the second uplink carrier, the SUL of the 4.9 GHz frequency band and the SUL of the 3.5 GHz frequency band may correspond to a same uplink resource used to carry the preamble sequence. In this scenario, the first uplink resource and the fifth uplink resource configured by the network device may be different, so that downlink carriers corresponding to preamble sequences from a same resource can be distinguished between. When the first uplink resource is different from the fifth uplink resource, the network device may determine, based on the uplink resource carrying the first signal or the first information, that the downlink carrier used for access to the network device by the terminal device that sends the first signal or the first information is the first downlink carrier or the third downlink carrier.

To further reduce uplink resource occupation on the second uplink carrier, the first uplink resource and the fifth uplink resource may be the same. When the first uplink resource and the fifth uplink resource are the same, the first signal or the first information in this embodiment of this application may further indicate the downlink carrier used by the terminal device to access the network device, in other words, whether the downlink carrier is the first downlink carrier or the third downlink carrier when the terminal device accesses the network device by using the SUL. For example, the first information may include an identifier of the downlink carrier used by the terminal device to access the network device. It should be understood that, in this case, in the foregoing embodiment, when the uplink resource configured by the network device to carry the first signal is the PRACH resource, because information carried by the PRACH resource is limited, the first downlink carrier or the third downlink carrier may be indicated by a sequence on the PRACH resource. When the uplink resource configured by the network device to carry the first information is the PUSCH resource, the PUSCH resource may be divided into bits, and the bits carry information indicating the first downlink carrier or the third downlink carrier. There is a correspondence between a bit value and a downlink carrier. For example, in the first information, 00 may represent the first downlink carrier, and 01 may represent the third downlink carrier. The system broadcast message or Msg2 may include the correspondence between a bit value and a downlink carrier.

In this embodiment of this application, the second uplink carrier may be SULs corresponding to a plurality of frequency bands, and the network device may configure, for the SULs corresponding to different frequency bands, different uplink resources used to carry preamble sequences. To reduce uplink resource occupation on the second uplink carrier, a same uplink resource used to carry a preamble sequence may be configured for SULs corresponding to different frequency bands. In this scenario, the network device may configure, for SULs corresponding to different frequency bands, different uplink resources used to carry a first signal or first information. To further save the uplink resources of the second uplink carrier, the network device may also configure, for SULs corresponding to different frequency bands, a same uplink resource used to carry a first signal or first information. When the network device configures, for SULs corresponding to different frequency bands, a same uplink resource used to carry a first signal or first information, the first signal or the first information may indicate a first downlink carrier or a third downlink carrier used to access the network device, so that the network device can communicate with a terminal device on the downlink carrier.

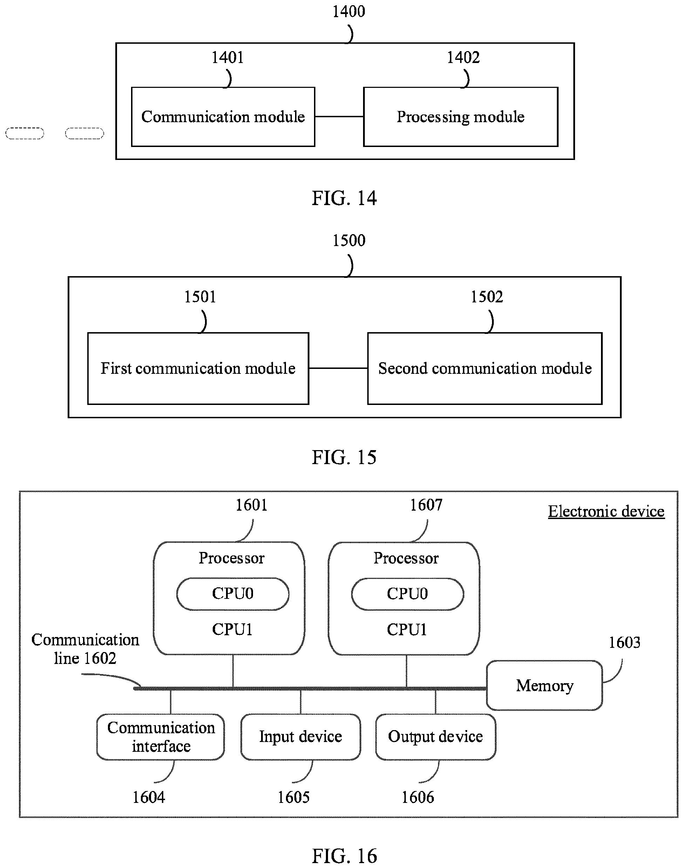

FIG. 14 is a schematic diagram of a structure of an access apparatus according to an embodiment of this application. The access apparatus in this embodiment may be the foregoing network device, or may be a chip in the network device. The access apparatus may be configured to perform the actions of the network device in the foregoing method embodiment. As shown in the FIG. 14, the access apparatus may include a communication module 1401 and a processing module 1402.

The communication module 1401 is configured to send first configuration information on a first downlink carrier, where the first configuration information indicates a first uplink resource, the first uplink resource is on a second uplink carrier, the second uplink carrier is a supplementary uplink SUL, and frequency bands of the second uplink carrier and the first uplink carrier that corresponds to the first downlink carrier are different.

The communication module 1401 is further configured to receive a first signal or first information from a terminal device on the first uplink resource.

The processing module 1402 is configured to determine, based on the first signal or the first information, whether the terminal device accesses the network device on the first downlink carrier.

The communication module 1401 is further configured to send a downlink signal on the first downlink carrier when the terminal device accesses the network device on the first downlink carrier.

In a possible design, the first signal is a sequence, and the first uplink resource is used to carry the sequence. The communication module 1401 is configured to send second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource.

In a possible design, the first uplink resource is an uplink resource used to carry service data of the terminal device, the first uplink resource is used to carry the first information, and the first information indicates that the terminal device accesses the network device on the first downlink carrier.

The communication module 1401 is further configured to send third configuration information on the first downlink carrier, where the third configuration information indicates a third uplink resource on the second uplink carrier, the third uplink resource is used to carry a preamble sequence, and the first configuration information and the third configuration information are included in a whole piece of configuration information; or
the communication module 1401 is further configured to send the first configuration information on a second downlink carrier corresponding to the second uplink carrier, where the service data is message 3 Msg3.

In a possible design, the communication module 1401 is further configured to send fourth configuration information on a second downlink carrier corresponding to the second uplink carrier, where the fourth configuration information indicates a fourth uplink resource on the second uplink carrier, and the fourth uplink resource is used to carry a preamble sequence.

In a possible design, a second uplink resource and the fourth uplink resource occupy a same time-domain frequency-domain code-domain resource on the second uplink carrier; or a third uplink resource and the fourth uplink resource occupy a same time-domain frequency-domain code-domain resource on the second uplink carrier.

In a possible design, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

In a possible design, the first uplink resource and the fourth uplink resource occupy a same time-domain frequency-domain resource on the second uplink carrier.

In a possible design, the first uplink resource and the fourth uplink resource occupy different time-domain frequency-domain resources on the second uplink carrier.

In a possible design, the communication module 1401 is further configured to send fifth configuration information on a third downlink carrier, where the fifth configuration information indicates a fifth uplink resource, the fifth uplink resource is on the second uplink carrier, the fifth uplink resource is used to carry the first signal or the first information, a frequency band of the third downlink carrier is different from that of the first downlink carrier, and the first signal or the first information indicates that the terminal device accesses the network device on the first downlink carrier or the third downlink carrier.

The access apparatus provided in this embodiment of this application may perform actions of the network device in the foregoing method embodiments. Their implementation principles and technical effects are similar. Details are not described herein again.

FIG. 15 is a schematic diagram of a structure of another access apparatus according to an embodiment of this application. The access apparatus in this embodiment may be the foregoing described terminal device, or may be a chip in the terminal device. The access apparatus may be configured to perform the actions of the terminal device in the foregoing method embodiment. As shown in the FIG. 15, the access apparatus may include a first communication module 1501 and a second communication module 1502.

The first communication module 1501 is configured to receive first configuration information on a first downlink carrier, where the first configuration information indicates a first uplink resource, the first uplink resource is on a second uplink carrier, the second uplink carrier is a supplementary uplink SUL, and frequency bands of the second uplink carrier and the first uplink carrier that corresponds to the first downlink carrier are different.

The second communication module 1502 is configured to send a first signal or first information on the first uplink resource, where the first signal or the first information indicates that the terminal device accesses a network device on the first downlink carrier.

In a possible design, the first signal is a sequence, and the first uplink resource is used to carry the sequence.

The first communication module 1501 is configured to receive second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource.

The second communication module 1502 is configured to send the preamble sequence on the second uplink resource, and send the sequence corresponding to the preamble sequence on the first uplink resource.

In a possible design, the first uplink resource is an uplink resource carrying service data of the terminal device, and the first uplink resource is used to carry the first information. The first communication module 1501 is further configured to receive third configuration information on the first downlink carrier, where the third configuration information indicates a third uplink resource on the second uplink carrier, the third uplink resource is used to carry the preamble sequence, and the first configuration information and the third configuration information are included in a whole piece of configuration information.

In a possible design, the first uplink resource is an uplink resource carrying the service data of the terminal device, and the first uplink resource is used to carry the first information, where the service data is message 3 Msg3.

In a possible design, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

The access apparatus provided in this embodiment of this application may perform actions of the terminal device in the foregoing method embodiments. Implementation principles and technical effects are similar. Details are not described herein again.

It should be understood that the foregoing communication module may be a transceiver or include a transmitter and a receiver in actual implementation. The processing module may be implemented in a form of software invoked by a processing element, or in a form of hardware. For example, the processing module may be a separately disposed processing element, or may be integrated into a chip of the foregoing apparatus. In addition, the processing module may be stored in a memory of the foregoing apparatus in a form of program code, and may be invoked by a processing element of the foregoing apparatus to perform a function of the foregoing processing module. In addition, all or some of these modules may be integrated, or may be implemented independently. The processing element herein may be an integrated circuit and has a signal processing capability. In an implementation process, steps in the foregoing methods or the foregoing modules can be implemented by using a hardware integrated logical circuit in the processing element, or by using instructions in a form of software. For example, the foregoing modules may be configured as one or more integrated circuits for performing the foregoing methods, for example, one or more application specific integrated circuits (application specific integrated circuits, ASICs), one or more microprocessors (digital signal processors, DSPs), or one or more field programmable gate arrays (field programmable gate arrays, FPGAs). For another example, when one of the foregoing modules is implemented in a form of program code invoked by a processing element, the processing element may be a general-purpose processor, for example, a central processing unit (central processing unit, CPU) or another processor that can invoke the program code. For another example, the modules may be integrated and implemented in a form of a system-on-a-chip (system-on-a-chip, SOC).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

FIG. 16 is a schematic diagram of a structure of an electronic device according to an embodiment of this application. As shown in FIG. 16, the electronic device may include at least one processor 1601, a communication line 1602, a memory 1603, and at least one communication interface 1604.

The processor 1601 may be a general-purpose central processing unit (central processing unit, CPU), a microprocessor, an application-specific integrated circuit (application-specific integrated circuit, ASIC), or one or more integrated circuits configured to control program execution of the solutions of this application. The communication line 1602 may include a path for transmitting information between the foregoing components. The communication interface 1604 is any apparatus such as a transceiver, and configured to communicate with another device or communication network such as the Ethernet, a RAN, or a wireless local area network (wireless local area network, WLAN).

The memory 1603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor by the communications line 1602. Alternatively, the memory may be integrated with the processor. Usually, the memory provided in this embodiment of this application may be a non-volatile memory. The memory 1603 is configured to store computer-executable instructions for executing the solutions in this application, and the processor 1601 controls execution of the computer-executable instructions. The processor 1601 is configured to execute the computer-executable instructions stored in the memory 1603, to implement the methods provided in the following embodiments of this application. Optionally, the computer-executable instructions in this embodiment of this application may also be referred to as application code. This is not specifically limited in this embodiment of this application.

In a specific implementation, in an embodiment, the processor 1601 may include one or more CPUs, for example, a CPU0 and a CPU1 shown in FIG. 16. During specific implementation, in an embodiment, a plurality of processors may be included, such as the processor 1601 and a processor 1607 in FIG. 16. Each of the processors may be a single-core (single-CPU) processor or a multi-core (multi-CPU) processor. The processor herein may be one or more devices, circuits, and/or processing cores configured to process data (for example, computer program instructions). In a specific implementation, in an embodiment, an output device 1605 and an input device 1606 may be further included. The output device 1605 communicates with the processor 1601, and may display information in a plurality of manners. For example, the output device 1605 may be a liquid crystal display (liquid crystal display, LCD), a light emitting diode (light emitting diode, LED) display device, a cathode ray tube (cathode ray tube, CRT) display device, or a projector (projector). The input device 1606 communicates with the processor 1601, and can receive an input from a user in a plurality of manners. For example, the input device 1606 may be a mouse, a keyboard, a touchscreen device, or a sensor device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

With reference to the foregoing descriptions, this application further provides the following embodiments.

Embodiment 1: An access method is provided, where the method is applied to a network device. The method includes:
sending first configuration information on a first downlink carrier, where the first configuration information indicates a first uplink resource, the first uplink resource is on a second uplink carrier, the second uplink carrier is a supplementary uplink SUL, and frequency bands of the second uplink carrier and a first uplink carrier that corresponds to the first downlink carrier are different;
receiving a first signal or first information from a terminal device on the first uplink resource;
determining, based on the first signal or the first information, whether the terminal device accesses the network device on the first downlink carrier; and
sending a downlink signal on the first downlink carrier when the terminal device accesses the network device on the first downlink carrier.

Embodiment 2: According to the method in Embodiment 1, the first signal is a sequence, the first uplink resource is used to carry the sequence, and the method further includes:
sending second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource.

Embodiment 3: According to the method in Embodiment 2, where the first uplink resource is a PRACH resource.

Embodiment 4: According to the method in Embodiment 2, where the sending second configuration information on the first downlink carrier includes:
sending a system broadcast message on the first downlink carrier, where the system broadcast message includes the first configuration information and the second configuration information, and the system broadcast message includes a correspondence between the preamble sequence and the sequence.

Embodiment 5: According to the method in Embodiment 1, the first uplink resource is an uplink resource carrying service data of the terminal device, the first uplink resource is used to carry the first information, and
the method further includes:
sending third configuration information on the first downlink carrier, where the third configuration information indicates a third uplink resource on the second uplink carrier, the third uplink resource is used to carry a preamble sequence, and the first configuration information and the third configuration information are included in a whole piece of configuration information; or
the method further includes:
   sending the first configuration information on a second downlink carrier corresponding to the second uplink carrier, where the service data is message 3 Msg3.

Embodiment 6: According to the method in Embodiment 5, the sending third configuration information on the first downlink carrier includes:
sending a system broadcast message on the first downlink carrier, where the system broadcast message includes the first configuration information and third configuration information.

Embodiment 7: According to the method in Embodiment 6, there is a correspondence between the preamble sequence and the uplink resource carrying the service data of the terminal device, and the system broadcast message includes the correspondence.

Embodiment 8: According to the method in Embodiment 5, the sending first configuration information on a first downlink carrier includes:
sending a system broadcast message on the first downlink carrier, where the system broadcast message includes the first configuration information; and
the sending the first configuration information on a second downlink carrier corresponding to the second uplink carrier includes:
   sending the system broadcast message on the second downlink carrier, where the system broadcast message includes the first configuration information.

Embodiment 9: According to the method in Embodiment 1, the method further includes:
sending fourth configuration information on a second downlink carrier corresponding to the second uplink carrier, where the fourth configuration information indicates a fourth uplink resource on the second uplink carrier, and the fourth uplink resource is used to carry a preamble sequence.

Embodiment 10: According to the method in Embodiment 1, the sending fourth configuration information on a second downlink carrier corresponding to the second uplink carrier further includes:
sending a system broadcast message on the second downlink carrier, where the system broadcast message includes the fourth configuration information.

Embodiment 11: According to the method in Embodiment 9 or 10, a second uplink resource and the fourth uplink resource occupy a same time-domain frequency-domain code-domain resource on the second uplink carrier; or a third uplink resource and the fourth uplink resource occupy a same time-domain frequency-domain code-domain resource on the second uplink carrier.

Embodiment 12: According to the method in Embodiment 9 or 10, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

Embodiment 13: According to the method in Embodiment 12, the first uplink resource and the fourth uplink resource occupy a same time-domain frequency-domain resource on the second uplink carrier.

Embodiment 14: According to the method in Embodiment 12, the first uplink resource and the fourth uplink resource occupy different time-domain frequency-domain resources on the second uplink carrier.

Embodiment 15: According to the method in any of Embodiments 1 to 14, the method further includes:
sending fifth configuration information on a third downlink carrier, where the fifth configuration information indicates a fifth uplink resource, the fifth uplink resource is on the second uplink carrier, and the fifth uplink resource is used to carry the first signal or the first information, and a frequency band of the third downlink carrier is different from that of the first downlink carrier.

Embodiment 16: According to the method in Embodiment 15, the fifth uplink resource is the same as the first uplink resource, and the first signal or the first information indicates that the terminal device accesses the network device on the first downlink carrier or the third downlink carrier.

Embodiment 17: According to the method in Embodiment 15, the fifth uplink resource is different from the first uplink resource.

Embodiment 18: According to the method in any of Embodiments 1 to 17, a frequency band corresponding to the second uplink carrier is lower than a frequency band corresponding to the first uplink carrier.

Embodiment 19: An access method is provided, where the method is applied to a terminal device. The method includes:
receiving first configuration information on a first downlink carrier, where the first configuration information indicates a first uplink resource, the first uplink resource is on a second uplink carrier, the second uplink carrier is a supplementary uplink SUL, and frequency bands of the second uplink carrier and the first uplink carrier that corresponds to the first downlink carrier are different; and
sending a first signal or first information on the first uplink resource, where the first signal or the first information indicates that the terminal device accesses a network device on the first downlink carrier.

Embodiment 20: According to the method in Embodiment 19, the first signal is a sequence, the first uplink resource is used to carry the sequence, and the method further includes:
receiving second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource; and
the sending a first signal or first information on the first uplink resource includes:
   sending the preamble sequence on the second uplink resource, and sending the sequence corresponding to the preamble sequence on the first uplink resource.
   Embodiment 21: According to the method in Embodiment 19, the first uplink resource is an uplink resource carrying service data of the terminal device, the first uplink resource is used to carry the first information, and
   the method further includes:
      receiving third configuration information on the first downlink carrier, where the third configuration information indicates a third uplink resource on the second uplink carrier, the third uplink resource is used to carry a preamble sequence, and the first configuration information and the third configuration information are included in a whole piece of configuration information.

Embodiment 22: According to the method in Embodiment 21, the sending a first signal or first information on the first uplink resource includes:
sending the preamble sequence on the third uplink resource, and sending the first information and service data on the first uplink resource.

Embodiment 23: According to the method in Embodiment 19, the first uplink resource is an uplink resource carrying service data of the terminal device, the first uplink resource is used to carry the first information, and the service data is message 3 Msg3.

Embodiment 24: According to the method in Embodiment 23, the sending a first signal or first information on the first uplink resource includes:
sending Msg3 on the first uplink resource, where Msg3 includes the first information.

Embodiment 25: According to the method in Embodiment 19, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

Embodiment 26: According to the method in Embodiment 25, the sending a first signal or first information on the first uplink resource includes:
sending the preamble sequence in the code domain resource set corresponding to the first uplink resource, where the preamble sequence in the code domain resource set indicates that the terminal device accesses the network device on the first downlink carrier.

Embodiment 27: An access apparatus is provided, where the access apparatus may be a network device or a chip or a system on chip in a network device, the access apparatus includes a processor and a memory, the memory stores instructions, and when the instructions are executed by the processor, the access apparatus is enabled to implement the following steps: sending first configuration information on a first downlink carrier, where the first configuration information indicates a first uplink resource, the first uplink resource is on a second uplink carrier, the second uplink carrier is a supplementary uplink SUL, and frequency bands of the second uplink carrier and a first uplink carrier that corresponds to the first downlink carrier are different;
receiving a first signal or first information from a terminal device on the first uplink resource;
determining, based on the first signal or the first information, whether the terminal device accesses the network device on the first downlink carrier; and
sending a downlink signal on the first downlink carrier when the terminal device accesses the network device on the first downlink carrier.

Embodiment 28: According to the apparatus in Embodiment 27, the first signal is a sequence, the first uplink resource is used to carry the sequence, and the access apparatus may further implement the following step:
sending second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource.

Embodiment 29: According to the apparatus in Embodiment 28, the first uplink resource is a PRACH resource.

Embodiment 30: According to the apparatus in Embodiment 28, the apparatus may further implement the following step:
sending a system broadcast message on the first downlink carrier, where the system broadcast message includes the first configuration information and the second configuration information, and the system broadcast message includes a correspondence between the preamble sequence and the sequence.

Embodiment 31: According to the apparatus in Embodiment 27, the first uplink resource is an uplink resource carrying service data of the terminal device, the first uplink resource is used to carry the first information, and
the access apparatus may further implement the following steps:
sending third configuration information on the first downlink carrier, where the third configuration information indicates a third uplink resource on the second uplink carrier, the third uplink resource is used to carry a preamble sequence, and the first configuration information and the third configuration information are included in a whole piece of configuration information; or
sending the first configuration information on a second downlink carrier corresponding to the second uplink carrier, where the service data is message 3 Msg3.

Embodiment 32: According to the apparatus in Embodiment 31, the access apparatus may further implement the following step: sending a system broadcast message on the first downlink carrier, where the system broadcast message includes the first configuration information and third configuration information.

Embodiment 33: According to the apparatus in Embodiment 32, there is a correspondence between the preamble sequence and the uplink resource carrying the service data of the terminal device, and the system broadcast message includes the correspondence.

Embodiment 34: According to the apparatus in Embodiment 31, the access apparatus may further implement the following steps: sending a system broadcast message on the first downlink carrier, where the system broadcast message includes the first configuration information; and
sending the system broadcast message on the second downlink carrier, where the system broadcast message includes the first configuration information.

Embodiment 35: According to the apparatus in Embodiment 27, the access apparatus may further implement the following step: sending fourth configuration information on a second downlink carrier corresponding to the second uplink carrier, where the fourth configuration information indicates a fourth uplink resource on the second uplink carrier, and the fourth uplink resource is used to carry a preamble sequence.

Embodiment 36: According to the apparatus in Embodiment 27, the access apparatus may further implement the following step: sending a system broadcast message on the second downlink carrier, where the system broadcast message includes the fourth configuration information.

Embodiment 37: According to the apparatus in Embodiment 35 or 36, a second uplink resource and the fourth uplink resource occupy a same time-domain frequency-domain code-domain resource on the second uplink carrier; or a third uplink resource and the fourth uplink resource occupy a same time-domain frequency-domain code-domain resource on the second uplink carrier.

Embodiment 38: According to the apparatus in Embodiment 35 or 36, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

Embodiment 39: According to the apparatus in Embodiment 38, the first uplink resource and the fourth uplink resource occupy a same time-domain frequency-domain resource on the second uplink carrier.

Embodiment 40: According to the apparatus in Embodiment 38, the first uplink resource and the fourth uplink resource occupy different time-domain frequency-domain resources on the second uplink carrier.

Embodiment 41: According to the apparatus in any of Embodiments 27 to 40, the access apparatus may further implement the following step: sending fifth configuration information on a third downlink carrier, where the fifth configuration information indicates a fifth uplink resource, the fifth uplink resource is on the second uplink carrier, the fifth uplink resource is used to carry the first signal or the first information, and a frequency band of the third downlink carrier is different from that of the first downlink carrier.

Embodiment 42: According to the apparatus in Embodiment 41, the fifth uplink resource is the same as the first uplink resource, and the first signal or the first information indicates that the terminal device accesses the network device on the first downlink carrier or the third downlink carrier.

Embodiment 43: According to the apparatus in Embodiment 41, the fifth uplink resource is different from the first uplink resource.

Embodiment 44: According to the apparatus in any of Embodiments 27 to 43, a frequency band corresponding to the second uplink carrier is lower than a frequency band corresponding to the first uplink carrier.

Embodiment 45: An access apparatus is provided, where the access apparatus may be a terminal device or a chip or a system on chip in a terminal device, the access apparatus includes a processor and a memory, the memory stores instructions, and when the instructions are executed by the processor, the access apparatus is enabled to implement the following step: receiving first configuration information on a first downlink carrier, where the first configuration information indicates a first uplink resource, the first uplink resource is on a second uplink carrier, the second uplink carrier is a supplementary uplink SUL, and frequency bands of the second uplink carrier and a first uplink carrier that corresponds to the first downlink carrier are different; and
sending a first signal or first information on the first uplink resource, where the first signal or the first information indicates that the terminal device accesses a network device on the first downlink carrier.

Embodiment 46: According to the apparatus in Embodiment 45, the first signal is a sequence, the first uplink resource is used to carry the sequence, and the access apparatus may implement the following step: receiving second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource; and
sending the preamble sequence on the second uplink resource, and sending the sequence corresponding to the preamble sequence on the first uplink resource.

Embodiment 47: According to the apparatus in Embodiment 45, the first uplink resource is an uplink resource carrying service data of the terminal device, the first uplink resource is used to carry the first information, and
the access apparatus implements the following step: receiving third configuration information on the first downlink carrier, where the third configuration information indicates a third uplink resource on the second uplink carrier, the third uplink resource is used to carry a preamble sequence, and the first configuration information and the third configuration information are included in a whole piece of configuration information.

Embodiment 48: According to the apparatus in Embodiment 47, the apparatus implements the following step: sending the preamble sequence on the third uplink resource, and sending the first information and service data on the first uplink resource.

Embodiment 49: According to the apparatus in Embodiment 47, the first uplink resource is an uplink resource carrying service data of the terminal device, the first uplink resource is used to carry the first information, and the service data is message 3 Msg3.

Embodiment 50: According to the apparatus in Embodiment 49, the access apparatus implements the following step: sending Msg3 on the first uplink resource, where Msg3 includes the first information.

Embodiment 51: According to the apparatus in Embodiment 45, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

Embodiment 52: According to the apparatus in Embodiment 51, the access apparatus implements the following step: sending the preamble sequence in the code domain resource set corresponding to the first uplink resource, where the preamble sequence in the code domain resource set indicates that the terminal device accesses the network device on the first downlink carrier.

Embodiment 53: An access apparatus, including a communication module and a processing module, where
the communication module is configured to send first configuration information on a first downlink carrier, where the first configuration information indicates a first uplink resource, the first uplink resource is on a second uplink carrier, the second uplink carrier is a supplementary uplink SUL, and frequency bands of the second uplink carrier and a first uplink carrier that corresponds to the first downlink carrier are different;
the communication module is further configured to receive a first signal or first information from a terminal device on the first uplink resource;
the processing module is configured to determine, based on the first signal or the first information, whether the terminal device accesses the network device on the first downlink carrier; and
the communication module is further configured to send a downlink signal on the first downlink carrier when the terminal device accesses the network device on the first downlink carrier.

Embodiment 54: According to the apparatus in Embodiment 53, the first signal is a sequence, the first uplink resource is used to carry the sequence, and the communication module is further configured to send second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource.

Embodiment 55: According to the apparatus in Embodiment 54, the first uplink resource is a PRACH resource.

Embodiment 56: According to the apparatus in Embodiment 54, the communication module is further configured to send a system broadcast message on the first downlink carrier, where the system broadcast message includes the first configuration information and the second configuration information, and the system broadcast message includes a correspondence between the preamble sequence and the sequence.

Embodiment 57: According to the apparatus in Embodiment 53, the first uplink resource is an uplink resource carrying service data of the terminal device, the first uplink resource is used to carry the first information, and
the communication module is further configured to send third configuration information on the first downlink carrier, where the third configuration information indicates a third uplink resource on the second uplink carrier, the third uplink resource is used to carry a preamble sequence, and the first configuration information and the third configuration information are included in a whole piece of configuration information; or
send the first configuration information on a second downlink carrier corresponding to the second uplink carrier, where the service data is message 3 Msg3.

Embodiment 58: According to the apparatus in Embodiment 57, the communication module is further configured to send a system broadcast message on the first downlink carrier, where the system broadcast message includes the first configuration information and third configuration information.

Embodiment 59: According to the apparatus in Embodiment 58, there is a correspondence between the preamble sequence and the uplink resource carrying the service data of the terminal device, and the system broadcast message includes the correspondence.

Embodiment 60: According to the apparatus in Embodiment 57, the communication module is further configured to send a system broadcast message on the first downlink carrier, where the system broadcast message includes the first configuration information; and
send the system broadcast message on the second downlink carrier, where the system broadcast message includes the first configuration information.

Embodiment 61: According to the apparatus in Embodiment 53, the communication module is further configured to send fourth configuration information on a second downlink carrier corresponding to the second uplink carrier, where the fourth configuration information indicates a fourth uplink resource on the second uplink carrier, and the fourth uplink resource is used to carry a preamble sequence.

Embodiment 62: According to the apparatus in Embodiment 53, the communication module is further configured to send a system broadcast message on a second downlink carrier, where the system broadcast message includes fourth configuration information.

Embodiment 63: According to the apparatus in Embodiment 61 or 62, a second uplink resource and the fourth uplink resource occupy a same time-domain frequency-domain code-domain resource on the second uplink carrier; or a third uplink resource and the fourth uplink resource occupy a same time-domain frequency-domain code-domain resource on the second uplink carrier.

Embodiment 64: According to the apparatus in Embodiment 61 or 62, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

Embodiment 65: According to the apparatus in Embodiment 64, the first uplink resource and the fourth uplink resource occupy a same time-domain frequency-domain resource on the second uplink carrier.

Embodiment 66: According to the apparatus in Embodiment 64, the first uplink resource and the fourth uplink resource occupy different time-domain frequency-domain resources on the second uplink carrier.

Embodiment 67: According to the apparatus in any of Embodiments 53 to 66, the communication module is further configured to send fifth configuration information on a third downlink carrier, where the fifth configuration information indicates a fifth uplink resource, the fifth uplink resource is on the second uplink carrier, the fifth uplink resource is used to carry the first signal or the first information, and a frequency band of the third downlink carrier is different from that of the first downlink carrier.

Embodiment 68: According to the apparatus in Embodiment 67, the fifth uplink resource is the same as the first uplink resource, and the first signal or the first information indicates that the terminal device accesses the network device on the first downlink carrier or the third downlink carrier.

Embodiment 69: According to the apparatus in Embodiment 67, the fifth uplink resource is different from the first uplink resource.

Embodiment 70: According to the apparatus in any of Embodiments 53 to 69, a frequency band corresponding to the second uplink carrier is lower than a frequency band corresponding to the first uplink carrier.

Embodiment 71: An access apparatus, including a first communication module and a second communication module, where
the first communication module is configured to receive first configuration information on a first downlink carrier, where the first configuration information indicates a first uplink resource, the first uplink resource is on a second uplink carrier, the second uplink carrier is a supplementary uplink SUL, and frequency bands of the second uplink carrier and a first uplink carrier that corresponds to the first downlink carrier are different; and
the second communication module is configured to send a first signal or first information on the first uplink resource, where the first signal or the first information indicates that the terminal device accesses a network device on the first downlink carrier.

Embodiment 72: According to the apparatus in Embodiment 71, the first signal is a sequence, the first uplink resource is used to carry the sequence, the first communication module is further configured to receive second configuration information on the first downlink carrier, where the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource; and
the second communication module is further configured to send the preamble sequence on the second uplink resource, and send the sequence corresponding to the preamble sequence on the first uplink resource.

Embodiment 73: According to the apparatus in Embodiment 71, the first uplink resource is an uplink resource carrying service data of the terminal device, the first uplink resource is used to carry the first information, and
the first communication module is further configured to receive third configuration information on the first downlink carrier, where the third configuration information indicates a third uplink resource on the second uplink carrier, the third uplink resource is used to carry the preamble sequence, and the first configuration information and the third configuration information are included in a whole piece of configuration information.

Embodiment 74: According to the apparatus in Embodiment 73, the second communication module is further configured to send the preamble sequence on the third uplink resource, and send the first information and service data on the first uplink resource.

Embodiment 75: According to the apparatus in Embodiment 71, the first uplink resource is an uplink resource carrying service data of the terminal device, the first uplink resource is used to carry the first information, and the service data is message 3 Msg3.

Embodiment 76: According to the apparatus in Embodiment 75, the second communication module is further configured to send Msg3 on the first uplink resource, where Msg3 includes the first information.

Embodiment 77: According to the apparatus in Embodiment 71, that the first configuration information indicates a first uplink resource includes: The first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

Embodiment 78: According to the apparatus in Embodiment 77, the second communication module is further configured to send the preamble sequence in the code domain resource set corresponding to the first uplink resource, where the preamble sequence in the code domain resource set indicates that the terminal device accesses the network device on the first downlink carrier.

Embodiment 79: A computer program product is provided. When the computer program product runs on a computer, the computer is enabled to perform the method in any one of Embodiment 1 to Embodiment 26.

Embodiment 80: A computer-readable storage medium is provided. The computer-readable storage medium stores instructions. When the instructions are run on a computer, the computer is enabled to perform the method in any one of Embodiment 1 to Embodiment 26.

Embodiment 81: A chip is provided. The chip includes a processor. When the processor executes instructions, the processor is configured to perform the method in any one of Embodiment 1 to Embodiment 26. The instructions may be from a memory inside the chip, or may be from a memory outside the chip. Optionally, the chip further includes an input/output circuit.

Although this application is described with reference to embodiments herein, a person skilled in the art may understand and implement another variation of the disclosed embodiments by viewing the accompanying drawings, disclosed content, and the appended claims. In the claims, "comprising" does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

## Claims

1. An access method, wherein the method is applied to a network device, and the method comprises:
sending first configuration information on a first downlink carrier, wherein the first configuration information indicates a first uplink resource, the first uplink resource is on a second uplink carrier, the second uplink carrier is a supplementary uplink SUL, and frequency bands of the second uplink carrier and a first uplink carrier that corresponds to the first downlink carrier are different;
receiving a first signal or first information from a terminal device on the first uplink resource;
determining, based on the first signal or the first information, whether the terminal device accesses the network device on the first downlink carrier; and
sending a downlink signal on the first downlink carrier when the terminal device accesses the network device on the first downlink carrier.

2. The method according to claim 1, wherein the first signal is a sequence, the first uplink resource is used to carry the sequence, and the method further comprises:
sending second configuration information on the first downlink carrier, wherein the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource.

3. The method according to claim 1, wherein the first uplink resource is an uplink resource carrying service data of the terminal device, the first uplink resource is used to carry the first information, and
the method further comprises:
sending third configuration information on the first downlink carrier, wherein the third configuration information indicates a third uplink resource on the second uplink carrier, the third uplink resource is used to carry a preamble sequence, and the first configuration information and the third configuration information are comprised in a whole piece of configuration information; or
the method further comprises:
sending the first configuration information on a second downlink carrier corresponding to the second uplink carrier, wherein the service data is message 3 Msg3.

4. The method according to claim 1, wherein the method further comprises:
sending fourth configuration information on a second downlink carrier corresponding to the second uplink carrier, wherein the fourth configuration information indicates a fourth uplink resource on the second uplink carrier, and the fourth uplink resource is used to carry a preamble sequence.

5. The method according to claim 4, wherein
a second uplink resource and the fourth uplink resource occupy a same time-domain frequency-domain code-domain resource on the second uplink carrier; or a third uplink resource and the fourth uplink resource occupy a same time-domain frequency-domain code-domain resource on the second uplink carrier.

6. The method according to claim 4, wherein that the first configuration information indicates a first uplink resource comprises: the first configuration information indicates a code domain resource set corresponding to the first uplink resource, the first uplink resource is used to carry the first signal, the first signal is a preamble sequence, and
the preamble sequence in the code domain resource set indicates that the terminal device accesses the network device on the first downlink carrier.

7. The method according to claim 6, wherein the first uplink resource and the fourth uplink resource occupy a same time-domain frequency-domain resource on the second uplink carrier.

8. The method according to claim 6, wherein the first uplink resource and the fourth uplink resource occupy different time-domain frequency-domain resources on the second uplink carrier.

9. The method according to any one of claims 1 to 8, wherein the method further comprises:
sending fifth configuration information on a third downlink carrier, wherein the fifth configuration information indicates a fifth uplink resource, the fifth uplink resource is on the second uplink carrier, the fifth uplink resource is used to carry the first signal or the first information, a frequency band of the third downlink carrier is different from that of the first downlink carrier, and the first signal or the first information indicates that the terminal device accesses the network device on the first downlink carrier or the third downlink carrier.

10. An access method, wherein the method is applied to a terminal device, and the method comprises:
receiving first configuration information on a first downlink carrier, wherein the first configuration information indicates a first uplink resource, the first uplink resource is on a second uplink carrier, the second uplink carrier is a supplementary uplink SUL, and frequency bands of the second uplink carrier and a first uplink carrier that corresponds to the first downlink carrier are different; and
sending a first signal or first information on the first uplink resource, wherein the first signal or the first information indicates that the terminal device accesses a network device on the first downlink carrier.

11. The method according to claim 10, wherein the first signal is a sequence, the first uplink resource is used to carry the sequence, the method further comprises:
receiving second configuration information on the first downlink carrier, wherein the second configuration information indicates a second uplink resource on the second uplink carrier, the second uplink resource is used to carry a preamble sequence, and one preamble sequence carried on the second uplink resource corresponds to one sequence carried on the first uplink resource, or a plurality of preamble sequences carried on the second uplink resource correspond to one sequence carried on the first uplink resource; and
the sending a first signal or first information on the first uplink resource comprises:
sending the preamble sequence on the second uplink resource, and sending the sequence corresponding to the preamble sequence on the first uplink resource.

12. The method according to claim 10, wherein the first uplink resource is an uplink resource carrying service data of the terminal device, the first uplink resource is used to carry the first information, and
the method further comprises:
receiving third configuration information on the first downlink carrier, wherein the third configuration information indicates a third uplink resource on the second uplink carrier, the third uplink resource is used to carry a preamble sequence, and the first configuration information and the third configuration information are comprised in a whole piece of configuration information.

13. The method according to claim 10, wherein the first uplink resource is an uplink resource carrying service data of the terminal device, the first uplink resource is used to carry the first information, and the service data is message 3 Msg3.

14. The method according to claim 10, wherein that the first configuration information indicates a first uplink resource comprises: the first configuration information indicates a code domain resource set corresponding to the first uplink resource, the first uplink resource is used to carry the first signal, the first signal is a preamble sequence, and the preamble sequence in the code domain resource set indicates that the terminal device accesses the network device on the first downlink carrier.

15. A network device, comprising:
a communication module, configured to send first configuration information on a first downlink carrier and receive a first signal or first information from a terminal device on a first uplink resource, wherein the first configuration information indicates the first uplink resource, the first uplink resource is on a second uplink carrier, the second uplink carrier is a supplementary uplink SUL, and frequency bands of the second uplink carrier and the first uplink carrier that corresponds to the first downlink carrier are different;
a processing module, configured to determine, based on the first signal or the first information, whether the terminal device accesses the network device on the first downlink carrier; and
a communication module, configured to send a downlink signal on the first downlink carrier when the terminal device accesses the network device on the first downlink carrier.

16. A terminal device, comprising:
a first communication module, configured to receive first configuration information on a first downlink carrier, wherein the first configuration information indicates a first uplink resource, the first uplink resource is on a second uplink carrier, the second uplink carrier is a supplementary uplink SUL, and frequency bands of the second uplink carrier and the first uplink carrier that corresponds to the first downlink carrier are different; and
a second communication module, configured to send a first signal or first information on the first uplink resource, wherein the first signal or the first information indicates that the terminal device accesses a network device on the first downlink carrier.

17. An electronic device, comprising a memory, a processor, and a transceiver, wherein
the processor is coupled to the memory and is configured to: read and execute instructions in the memory, to implement the method according to any one of claims 1 to 14; and
the processor is coupled to the transceiver and controls the transceiver to receive and send a message.

18. A computer-readable storage medium, wherein the computer storage medium stores computer instructions, and when the computer instructions are executed by a computer, the computer is enabled to perform the method according to any one of claims 1 to 14.

19. A program product, wherein the program product comprises a computer program, the computer program is stored in a readable storage medium, at least one processor of a communication apparatus may read the computer program from the readable storage medium, and the at least one processor executes the computer program, so that the communication apparatus implements the method according to any one of claims 1 to 14.
